(19) Europäisches Patentamt
European Patent Office
Office européen des brevets

(11) Numéro de publication: **0 258 127 B1**

# (12) FASCICULE DE BREVET EUROPEEN

(45) Date de publication du fascicule du brevet: **21.03.90**

(51) Int. Cl.⁴: **B01J 29/28**, C10G 11/05, C07C 5/00, C10G 47/16

(21) Numéro de dépôt: **87401859.1**

(22) Date de dépôt: **10.08.87**

(54) **Nouvelle zéolite L décationisée, désaluminée et stabilisée et ses utilisations.**

(30) Priorité: **13.08.86 FR 8611796**
**24.10.86 FR 8614950**
**03.11.86 FR 8615377**
**03.03.87 FR 8702969**

(43) Date de publication de la demande:
**02.03.88 Bulletin 88/9**

(45) Mention de la délivrance du brevet:
**21.03.90 Bulletin 90/12**

(84) Etats contractants désignés:
**BE DE GB IT NL**

(56) Documents cités:
**EP-A- 0 096 479**
**EP-A- 0 206 871**
**FR-A- 1 286 690**
**FR-A- 2 166 362**
**FR-A- 2 561 946**
**FR-A- 2 563 445**
**FR-A- 2 568 589**
**FR-A- 2 569 678**
**US-A- 4 415 438**
**US-A- 4 539 304**

(73) Titulaire: **INSTITUT FRANCAIS DU PETROLE, 4, Avenue de Bois-Préau, F-92502 Rueil-Malmaison(FR)**

(72) Inventeur: **Raatz, Francis, 17, rue Michelet, F-92500 Rueil Malmaison(FR)**
Inventeur: **Petit, Laurent, 2, rue Stendhal, F-78130 Les Mureaux(FR)**
Inventeur: **Marcilly, Christian, 91 ter rue Condorcet, F-78800 Houilles(FR)**
Inventeur: **Bournonville, Jean-Paul, 43, rue des Groues Vauréal, F-95000 Cergy Pontoise(FR)**
Inventeur: **Dufresne, Pierre, 67, rue Georges Sand, F-92500 Rueil Malmaison(FR)**
Inventeur: **Travers, Christine, 12, Bd du Général De Gaulle, F-92500 Rueil Malmaison(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 258 127 B1

ACTORUM AG

## Description

La présente invention est relative à une nouvelle zéolithe stabilisée, décationisée et désaluminée ainsi qu'à sa préparation à partir d'une zéolithe L de rapport molaire $SiO_2/Al_2O_3$ compris généralement entre 5 et 7 ou entre 5,2 et 6,9, pouvant contenir par example entre 13,8 et 16,5 % en poids de potassium et éventuellement jusqu'à 10 % en poids de sodium.

D'une façon générale, on peut partir d'une zéolithe L de rapport molaire $SiO_2/Al_2O_3$ généralement compris entre 5 et 7, dont le rapport molaire $K^+/(K^+ = Na^+)$ est généralement compris entre 1 et 0,3 et dont les paramètres cristallins $\vec{a}$ et $\vec{c}$ sont respectivement égaux à l,84 ± 0,004 et 0,752 ± 0,003 nm.

La zéolithe L stabilisée, désaluminée et appauvrie en cations alcalins de la présente invention possède un rapport molaire ($SiO_2/Al_2O_3$) global supérieur ou égal à 8 et de préférence supérieur ou égal à 12, (ce rapport pouvant être très élevé, si nécessaire, et dépasser par exemple la valeur 100), sa teneur en potassium est inférieure à 2,9 % en poids et de préférence inférieure à 0,7 % en poids, et si nécessaire inférieure à 0,1 % en poids, sa teneur en sodium est inférieure à 0,5 % en poids. Le solide stabilisé, désaluminé et appauvri en cations alcalins ($K^+$, $Na^+$) conserve un diagramme de diffraction X caractéristique de la zéolithe L avec des paramètres cristallins $\vec{a}$ et $\vec{c}$ respectivement inférieurs à 1,836 nm et 0,754 nm et de préférence inférieurs à 1,815 nm et 0,752 nm respectivement.

La capacité d'adsorption d'azote du solide stabilisé, désaluminé et décationisé de la présente invention, mesurée à 77 K sous une pression partielle P/Ps = 0.19, est supérieure à 11 % en poids et de préférence supérieure à 14 % en poids. Sa capacité d'adsorption de benzène déterminée à 30°C sous une pression partielle P/Ps = 0,25 est supérieure à 8,5 % en poids et de préférence supérieure à 11 % en poids. Le solide obtenu par la présente invention possède un réseau de pores secondaires (mésopores) dont les rayons mesurés par adsorption-désorption d'azote par la méthode BJH à 77 K sont compris entre 0,8 nm et 20 nm ou entre 1,5 et 20 et plus spécifiquement entre 1,5 nm et 6,0 nm. Le volume des pores secondaires représente de 5% à 70% du volume poreux total, le reste du volume poreux étant constitué pour sa majeure partie par les micropores structuraux de la zéolithe (rayon inférieur à 1 nm).

D'une façon générale le taux de cristallinité DX de la zéolithe L selon l'invention est supérieur à 60% et de préférence à 80%.

La procédure de préparation du nouveau matériau zéolithique décrit ci-dessus est basée sur l'utilisation combinée d'échanges ioniques avec des cations ammonium (ou éventuellement des protons), de traitements thermiques en présence ou non de vapeur d'eau et d'attaques en milieu acide. Ces divers traitements, que l'on peut considérer comme des étapes unitaires ont déjà été employés dans l'art antérieur pour décationiser, désaluminer et stabiliser des zéolithes synthétisées avec des rapports $SiO_2/Al_2O_3$ faibles comme la zéolithe Y (US 3 595 611; US 3 966 882), l'offrétite (brevet francais n° 2 569 678) et l'oméga (Brevet Français, n° 2 583 654 publieé le 26 décembre 1986). Cependant l'état de l'art antérieur montre que les traitements cités précédement n'ont jamais pu être utilisés avec succès pour préparer une zéolithe L décationisée, désaluminée et stabilisée conforme à la présente invention. Plus précisément à notre connaissance un tel solide n'a jamais pu être préparé par quelque méthode que ce soit. En effet la zéolithe L est une structure réputée très fragile à la fois thermiquement et vis à vis de traitements acides. Comme on le verra plus loin, la plupart des auteurs s'accordent pour conclure que l'élimination même partielle des cations potassium qu'elle contient initialement conduit, de manière irrémédiable, à une dégradation très sévère, voire à une destruction, de la charpente cristalline lors de traitements stabilisants classiques (calcination sous vapeur d'eau par exemple). Les traitements décationisants, désaluminants et stabilisants décrits dans l'invention permettent d'obtenir quand ils sont utilisés de manière adéquate une zéolithe de structure L, appauvrie et si nécessaire très appauvrie en alcalins (potassium et sodium), désaluminée et très stable thermiquement. Outre l'amélioration considérable de la stabilité thermique du solide, les traitement décrits dans l'invention conduisent, au travers de l'élimination des cations alcalins et du contrôle du rapport $SiO_2/Al_2O_3$, à des zéolithes L dont les propriétés acides sont très nettement supérieures à celles de la zéolithe de départ et à celles des zéolithes L modifées suivant les protocoles de l'art antérieur. Les solides de structure L de la présente invention peuvent être utilisés comme catalyseur ou support de catalyseur dans des applications faisant appel à des réactions à mécanisme acide comme par exemple le craquage, l'hydrocraquage ou l'hydroisomérisation de fractions pétrolières.

La zéolithe L est une zéolithe synthétique, sans équivalent naturel connu, qui a été découverte en 1958 (US-A 2,711,565 ; US-A 3,216,789). Elle est synthétisée en présence de cations potassium et éventuellement de cations sodium. La composition chimique de la zéolithe L sous forme déshydratée est typiquement (R. BARRER and H. VILLIGER, Z. KRISTALLOGR. Bd 128, 3-6, p. 352) :

$(K_{0,91}Na_{0,08})_2Al_2O_3\ 6,05\ SiO_2$.

Le rapport molaire ($SiO_2Al_2O_3$) est généralement succeptible de varier entre 5,2 et 6,9 et le rapport molaire (K/(K + Na)) entre 0,3 et 1,0 (US-A 2711,565, US-A 3,216,789). La plupart des zéolithes L, qui ont fait l'objet d'études publiées dans la littérature scientifique, ont un rapport $SiO_2/Al_2O_3$ molaire très proche de 6 et comme cation largement majoritaire : le potassium. La structure cristallographique de la zéolithe L a été déterminée en 1969 (R. BARRER and H. VILLIGER, Z. KRISTALLOGR, Bd 128, 3-6, p. 352). Elle cristallise dans le système hexagonal avec les paramètres de maille suivants :

$\vec{a} = 1{,}84 \pm 0{,}004$ nm, $\vec{c} = 0{,}752 \pm 0{,}003$ nm.

La charpente cristalline est composée de l'arrangement de cages cancrinites et de prismes hexagonaux, arrangement qui ménage dans la structure un réseau de canaux unidimensionnels, parallèles à l'axe $\vec{c}$ d'ouverture à douze atomes d'oxygène et dont le diamètre est voisin de 0,71 nm (R. BARRER and H. VILLIGER, Z. KRISTALLOGR, Bd 128, 3-6, p. 352). Cette taille de pores range la zéolithe L dans la catégorie des zéolithes Y. La zéolithe L comporte quatre types de sites cationiques (R. BARRER and H. VILLIGER, Z. KRISTALLOGR. Bd 128, 3-6, p. 352) diversement accessibles. Les sites les plus inaccessibles sont probablement ceux qui sont localisés dans les prismes hexagonaux. L'existence de tels sites peu ou pas accessibles explique, très probablement, comme on le verra plus loin, l'impossibilité d'éliminer tous les cations alcalins dans la zéolithe L par des techniques classiques.

Bien que la zéolithe L apparaisse, de par sa structure poreuse, comme particulièrement attractive en catalyse, elle a fait l'objet d'un nombre restreint d'études et encore plus restreint d'applications. L'application la plus importante concerne, très certainement, l'utilisation de zéolithe KL non désaluminée ni décationisée et contenant des petites particules de métal noble, comme catalyseur monofonctionnel métallique en reformage catalytique (US-A 4,104,320, EP-A 145 289, US-A 4,443,326). Les performances de catalyseurs à base de zéolithe L ont été très peu explorées et sans subir de traitements de désalumination ou de stabilisation préalables.

Il est très probable que le peu d'intérêt suscité par la zéolithe L en catalyse acide ou bifonctionnelle acide-métallique s'explique par les échecs rencontrés lors de la préparation de zéolithe L désaluminée, stabilisée et fortement appauvrie en cations alcalins, notamment en potassium. En effet il est bien connu dans l'art antérieur que les cations potassium ne sont pas éliminables totalement par des échanges ioniques classiques (T. WEEKS and A. BOLTON, J. Phys. Chem. 79, (1975), 1924) et que la forme $NH_4$ KL est très fragile thermiquement (T. WEEKS and A. BOLTON, J. Phys. Chem. 79, (1975), 1924).

Les échanges cationiques classiques réalisés dans des solutions de sels d'ammonium ne permettent d'élininer qu'environ 80 % des cations potassium (T. WEEKS and A. BOLTON, J. Phys. Chem, 79, (1975), 1924). Il est probable que ce sont les cations potassium localisés dans les sites difficilement accessibles, voire inaccessibles comme les prismes hexagonaux et les cages cancrinites qui sont responsables des limitations observées pour les taux d'échange.

L'élimination partielle des cations $K^+$ peut être réalisée par des traitements en milieu acide sur la zéolithe KL ou une zéolithe L préalablement échangée par $NH_4{}^+$. Si les conditions de traitements sont modérées (faible concentration en acide, basse température) la structure cristalline de la zéolithe est modérément altérée mais les taux d'échange sont alors limités. Une teneur assez basse en potassium (1.56 %s) en poids a été obtenue par traitements acide direct dans HCl 0.02 N (N. BURSIAN, Y. SHAVANDIN, V. NIKOLINA, L. KIRKACH and Z. DAVYDOVA, Zh. Prik. Khim, vol. 48, n° 3, (1975), 554). Cependant la zéolithe L a très probablement dans ce cas un rapport $SiO_2/Al_2O_3$ très faible de l'ordre de 5, la teneur en potassium de 1.56 % en poids correspond alors à un taux d'échange compris entre 80 et 90 %. Des conditions de traitements plus sévères permettent d'augmenter le taux d'échange mais conduisent alors à une destruction sévère de l'ordre cristallin et à une amorphisation de la zéolithe. Par ailleurs les traitements directs dans des solutions acides ne conduisent pas uniquement à une décationisation mais également à une désalumination du solide. Il est bien connu dans l'art antérieur qu'une désalumination directe en solution de zéolithes riches en aluminium se traduit par l'apparition de défauts dans la structure et par une destruction de l'ordre cristallin. Il n'est donc pas étonnant que les essais de décationisation par traitement direct en milieu acide dans des conditions non parfaitement contrôlées de la zéolithe L se soient révélés négatifs.

En ce qui concerne la stabilité thermique de la zéolithe $NH_4$Kl, seuls des solides contenant des quantités importantes de potassium ont pu être étudiés (taux d'échange généralement inférieur à 80 %). A cet égard les résultats de la littérature convergent tous vers la même conclusion : les zéolithes $NH_4$KL sont très fragiles thermiquement. Ainsi des zéolithes $NH_4$KL échangées à environ 80 % traitées sous vapeur d'eau voient leur taux de cristallinité mesuré par diffraction X très fortement diminué dès 550°C, la destruction étant effective à 820°C (M. RUSAK, I. URBANOVICH, N. KOZLOV. Izv. An. BSSR. Ser. Khim, 3, (1976), 37). Le même type de phénomène est observé, lors de calcinations réalisées dans des conditions non contrôlées en l'absence de vapeur d'eau, pour des formes $NH_4$KL fortement échangées (≃ 80 %) : dès 500°C la cristallinité mesurée par diffraction X est très fortement dégradée (T. WEEKS and A. BOLTON, J. Phys. Chem, 79, (1975), 1924). D'après la plupart des auteurs la fragilité lors de traitements thermiques de la zéolithe L sous forme $NH_4$K augmente quand la teneur en potassium diminue, c'est-à-dire quand le taux d'échange augmente (T. KEII, J. Chem. Soc. Farad. Trans 1, 72, (1976), 2150). D'après ces mêmes auteurs la présence de potassium en quantité importante, particulièrement dans les cages cancrinites serait nécessaire pour maintenir à haute température la cohérence du réseau cristallin. Il est possible de limiter la destruction de formes $NH_4$KL fortement échangées lors de traitements thermiques en utilisant des lits épais (T. WEEKS and A. BOLTON, J. Phys. Chem. 79, (1975), 1924), cependant les cristallinités mesurées par DX des solides obtenus par cette technique sont très inférieures à celles du solide initial.

Dans le brevet US 3,794,600 qui reprend en partie un procédé décrit dans US-A 3,375,065, une méthode est revendiquée pour éliminer pratiquement complètement le potassium de la zéolithe L (% K < 0.35 % poids) sans altérer la cristallinité des solides. Cette méthode consiste à calciner la zéolithe $NH_4KL$ à des températures inférieures à 600°C et à procéder à des échanges dans des solutions de sels d'ammonium contenant des ions chromates. Il est très important de noter que dans ce document (US-A 3,794,600) la cristallinité des solides n'est pas mesurée par diffraction X mais par adsorption de benzène. Or il a été établi (T. WEEKS and A. BOLTON, J. Phys. Chem. 79, (1975), 1924) que la calcination réalisée sans précautions particulières de la zéolithe $NH_4KL$ échangée à 80 % (ère étape de US-A 3, 1794,600) conduit à une très sévère altération voire une destruction de la cristallinité DX alors que la capacité d'adsorption du solide reste relativement très élevée. Dans ces conditions, dans la mesure où les conditions de calcination ne sont pas clairement précisées dans US-A 3,794,600, il est très probable que les solides décationisés obtenus suivant les procédures préconisées dans ce document ont une cristallinité DX faible.

Il apparait ainsi, que dans l'état actuel de l'art, on ne sait pas préparer une zéolithe L décationisée, désaluminée, de faible volume de maille, stabilisée et possédant un réseau de pores secondaires. A partir de zéolithes L possédant de telles caractéristiques il est possible de préparer des catalyseurs actifs et sélectifs pour les réactions de conversion d'hydrocarbures.

ZEOLITHES L DECATIONISEES, DESALUMINEES ET STABILISEES.

On a constaté que par l'utilisation judicieuse de traitements en solutions (solutions de sels d'ammonium ionisables ou solutions acides) et de traitements thermiques, opérations réalisées dans des conditions contrôlées, il est possible de préparer à partir d'une zéolithe L brute de synthèse (sous forme KL ou KNaL) de rapport molaire $SiO_2/Al_2O_3$ compris généralement entre 5,2 et 6,9 (ce rapport pouvant être compris dans une fourchette plus large), une zéolithe L bien cristallisée au sens de la diffraction X et de l'adsorption d'azote et dont les caractéristiques ont été données plus haut.

CARACTERISATION DES ZEOLITHES L DECATIONISEES, DESALUMINEES ET STABILISEES

La zéolithe L décationisée, riche en silice, stabilisée par la présente invention a été caractérisée par les techniques suivantes :

. Diffraction des rayons X.

L'appareillage utilisé comprend : un générateur PHILIPS PW1130 (35 mA, 35 kV), un goniomètre PHILIPS PW 1050, un tube Cu (Foyer Fin), un monochromateur arrière de graphite, un passeur automatique d'échantillon.

A partir des spectres de diffraction des rayons X, on a mesuré pour chaque échantillon, la surface du fond sur une plage de 10 à 38° (2 θ), et dans la même zone, la surface des raies en nombre d'impulsions pour un enregistrement pas à pas de 2 secondes sur des paas de 0.02° (2 θ). Le pourcentage de produit cristallisé est exprimé par le rapport

$$\frac{\text{surface des raies}}{\text{surface totale}}.$$

On compare ensuite les rapports de chaque échantillon traité, par rapport à une référence étalon de la même série que l'échantillon et contenant une quantité de potassium similaire. Pour les solides traités à la vapeur et désaluminés la référence est généralement le solide décationisé mais non désaluminé. Ainsi le traux de cristallinité est exprimé en pourcentage par rapport à une référence prise arbitrairement à 100.

Il est important de bien choisir la référence, car dans certains cas, il peut y avoir une exaltation ou une diminution d'intensité des raies, en fonction de la teneur en cations des échantillons.

Les paramètres cristallins ont été calculés par la méthode des moindres carrés à partir de la formule (maille hexagonale) donnée dans X-ray Diffraction Procedures (JOHN WILEY Inc. N.Y.C.) :

$$d = \frac{a}{\sqrt{\left[\frac{4}{3}\ (h^2 + k^2 + hk)\right] + \frac{L^2}{c^2}}}$$

. Microporosité et mésoporosité.

La mésoporosité secondaire est déterminée par la technique BJH (BARRET, JOYNER, HALENDA, J. Am. Chem. Soc. 73, (1951), 373) basée sur l'exploitation numérique de l'isotherme de désorption d'azote à 77 K. Le volume poreux total est pris à une pression d'azote telle que P/Po = 0,95, P étant la pression d'azote de la mesure et Po la pression de vapeur saturante de l'azote à la température de la mesure.

Le volume des pores secondaires est mesuré par différence entre le volume poreux total pris à une pression d'azote telle que P/Po = 0,95 et le volume microporeux estimé à partir de la quantité d'azote adsorbée à P/Po = 0,19.

La quantité d'adsorption de benzène est mesurée par gravimétrie. La température d'adsorption est 30°C et sous une pression partielle de benzène de 25 Torr (3333 Pa).

. Analyse chimique quantitative.

La composition chimique des échantillons solides est déterminée par analyse chimique classique : Fluorescence X et absorption atomique.

PREPARATION DES ZEOLITHES L DECATIONISEES, DESALUMINEES ET STABILISEES

La zéolithe L de départ est obtenue par synthèse (EP-A 142 347, EP-A 142 355 et US-A 3,216,789 par exemple). Elle peut contenir jusqu'à 10 % en poids de sodium et 13,8 à 16,5 % en poids de potassium. Le rapport molaire $K^+/(K^+ + Na^+)$ est généralement compris dans le domaine 1,0 et 0,3 et le rapport molaire $SiO_2/Al_2O_3$ est situé généralement entre 5,2 et 6,9. Les paramètres cristallins $\vec{a}$ et $\vec{c}$ sont respectivement égaux à 1,84 ± 0,004 nm et 0,752 ± 0,003 nm.

Pour préparer les zéolithes L décationisées, désaluminées et stabilisées de la présente invention, la méthode utilisée est la suivante :

Première étape :

On élimine tout d'abord une partie importante des cations alcalins (c'est à dire majoritairement $K^+$) par des techniques connues dans l'art antérieur. A ce stade il est important d'aboutir à une teneur en alcalin et plus particulièrement en potassium inférieure à 6 % en poids et de préférence 4 voire 3 % en poids sans altérer la cristallinité du solide. Pour ce faire, on pourra au choix procéder :

- à au moins un échange ionique à une température comprise entre 0 et 150°C dans une solution d'un sel d'ammonium ionisable (nitrate, sulfate, chlorure, acétate etc.) de normalité située entre 0,1 N et la saturation, et de préférence entre 4 et 12N pendant au moins 20 mn,
- à au moins un traitements entre 0 et 150°C dans une solution d'un acide minéral (HCl, $HNO_3$, $H_2SO_4$ etc.) ou organique ($CH_3$ COOH etc.) de normalité inférieure à 1N et de préférence 0.2N pendant au moins 20 mn.

Il est possible d'atteindre les teneurs requises en cations alcalins en combinant les traitements dans les solutions de sels d'ammonium ionisables et les traitements dans les solutions acides diluées ou encore en réalisant les traitements dans des solutions contenant à la fois un ou plusieurs sels d'ammonium ionisables et un ou plusieurs acides, ceci à condition que la normalité totale en acide soit inférieure à 1N et de préférence 0.2N.

Deuxième étape:

La zéolithe obtenue après cette première série de traitements est soumise à une calcination en présence ou non de vapeur d'eau. Les conditions préférées sont celles qui permettent une élimination rapide des produits de décomposition, essentiellement eau et éventuellement ammoniac. Cependant en fonction de la teneur en cation du solide et de la température retenue on pourra réaliser la calcination en présence d'une faible quantité de vapeur d'eau. Les conditions opératoires préférées pour cette première calcination sont de préférence les suivantes:

– calcination sous air ou gaz inerte contenant moins de 1% de vapeur d'eau avec des débits totaux compris entre 0,5 et 100 $lh^{-1} g^{-1}$ et de préférence supérieurs à 5 $lh^{-1} g^{-1}$, La vitesse de montée en température est fonction du débit de gaz, plus le débit de gaz est faible plus la vitesse de montée en température sera lente; on retiendra de préférence des vitesses de montée de l'ordre de 5°C $mn^{-1}$, La température de traitement est inférieure à 800°C, elle est de préférence comprise entre 300 et 600°C, la fourchette préférée étant 380°C–480°C. La durée du palier à la température de traitement est supérieure à 20 mn et de préférence supérieure à 60 mn.

Troisième étape:

Après cette calcination la zéolithe subit au moins un traitement dans des solutions de sels d'ammonium ionisables ou dans des solutions acides. Les conditions préférées de traitement sont les suivantes: utilisation au choix:
– d'une solution d'un sel d'ammonium ionisable (nitrate, sulfate, chlorure, acétate etc.) de normalité comprise entre 0,1 N et la saturation et de préférence entre 4 et 12 N à une température située dans la fourchette 0°, 150°C pendant au moins 20 mn,
– d'une solution d'un acide minéral (HCl, $H_2SO_4$, $HNO_3$ etc.) ou organique ($CH_3COOH$ etc.) de normalité inférieure à 10 N et de préférence inférieure à 3 N, la température étant comprise entre 0° et 150°C.

A l'issue de ces divers traitements la teneur en potassium des solides est inférieure à 2,9% en poids et de préférence inférieure à 0,7% en poids, (la teneur en sodium étant à ce stade généralement inférieure à 0,5% en poids et la cristallinité mesurée par diffraction X ou adsorption d'azote conservée).

Quatrième étape:

La zéolithe L bien cristallisée à teneur réduite en alcalins ainsi obtenue est soumise à un traitement thermique en présence ou non de vapeur d'eau, la présence de vapeur d'eau étant préférée. Deux types de protocoles peuvent être utilisés:
. calcination sous un gaz (air ou gaz contenant de l'air ou gaz inerte), ce gaz contenant entre 5% et 100% de vapeur d'eau avec des débits totaux compris entre. 0.01 et 100 $lh^{-1}$ $g^{-1}$, La température de calcination est située entre 500 et 900°C, la durée du traitement étant supérieure à 20 mn et de préférence supérieure à 60 mn.
. Calcination en atmosphère confinée, c'est-à-dire avec un débit de gaz extérieur nul. Dans ce cas, la vapeur d'eau nécessaire au traitement est apportée par le produit lui-même (self steaming). La température du traitement est comme précédemment située entre 500°C et 900°C, sa durée est supérieure à 20 mn et de préférence supérieure à 60 mn.

Cinquième étape :

Après le traitements thermique précédent, la zéolithe L subit au moins une attaque dans une solution d'un acide minéral (HCl, $H_2SO_4$, $HNO_3$ etc.) ou organique ($CH_3COOH$, etc) à une température comprise ente 0° et 150°C. La normalité de la solution acide est comprise entre 0,05 et 10N et de préférence entre 0,5 et 5N, le rapport volume solution/poids de solide exprimé en $cm^3$ $g^{-1}$ est de préférence situé entre 2 et 20. La durée du traitements est supérieure à 20 mn. De manière à éviter une dégradation possible du solide il est important d'optimiser la force d'attaque acide en fonction de la température du dernier traitements thermique et de la teneur en vapeur d'eau utilisée pour ce traitements. Pour cela il est souhaitable de choisir, pour un acide donné, une concentration adaptée aux conditions du dernier traitements thermique (plus la température de calcination est faible plus la concentration en acide sera réduite) ou encore de mettre tout d'abord la zéolithe en suspension dans l'eau distillée avant d'ajouter l'acide de manière graduelle.

Pour obtenir un solide décationisé, désaluminé conservant sa cristallinité mesurée à la fois par diffraction X et adsorption d'azote il est particulièrement important de choisir correctement les conditions opératoires des différents traitements décrits précédemment. A cet égard la température de la calcination de la deuxième étape, la présence ou non de vapeur d'eau lors de cette étape ainsi que la vitesse d'élimination des produits de décomposition doivent être adaptées à la teneur en cations alcalins atteinte à l'issue de l'étape 1. De même la température maximale de la calcination de l'étape 4 ainsi que la teneur en vapeur d'eau retenue pour cette étape doivent être choisies, non seulement en fonction des caractéristiques désirées pour le produit final mais aussi en fonction de la teneur en cations alcalins du solide à l'issue de l'étape 3. Par ailleurs, comme souligné précédemment la sévérité de l'attaque acide constituée par l'étape 5 doit être optimisée en fonction des conditions de traitements retenues lors des étapes 1, 2, 3 et 4. Pour atteindre des rapports $SiO_2/Al_2O_3$ très élevés, par exemple supérieurs à 50, il peut s'avérer nécessaire de procéder à plusieurs cycles calcination-attaque acide, c'est-à-dire de répéter plusieurs fois les étapes 4 et 5. Il est important de noter que si les conditions opératoires choisies pour l'étape 1 permettent d'abaisser suffisamment la teneur en cations alcalins et plus particulièrement en potassium du solide (% K inférieur de préférence à 3 % en poids) on pourra ne pas réaliser les étapes 2 et 3 à condition cependant d'adapter en conséquence les conditions opératoires des étapes 4 et 5.

La zéolithe L décationisée, désaluminée et stabilisée dont on vient de décrire la préparation et les caractéristiques peut être utilisée comme catalyseur ou partie de catalyseur (en mélange avec une matrice) dans les réactions à mécanisme acide ou bifonctionnel acide-métallique de transformation d'hydrocarbures.

Les exemples 1 à 8 illustreront ci-après les qualités de la zéolithe selon l'invention.

La présente invention concerne également un procédé de craquage catalytique à l'état fluide de charges d'hydrocarbures en présence d'un catalyseur qui renferme la zéolithe L décationisée, désaluminée et stabilisée.

On sait que l'industrie pétrolière utilise de façon usuelle des procédés de craquage, dans lesquels des molécules d'hydrocarbures à haut poids moléculaire et à point d'ébullition élevé sont scindées en molécules plus petites, qui peuvent bouillir dans des domaines de températures plus faibles, convenant à l'usage recherché.

Par exemple le procédé le plus couramment employé dans ce but à l'heure actuelle, est le procédé dit de craquage catalytique à l'état fluide (en anglais, Fluid Catalytic Cracking, ou encore procédé FCC).

Dans ce type de procédé, la charge d'hydrocarbures est vaporisée et mise en contact à haute température avec un catalyseur solide de craquage, qui est maintenu en suspension dans les vapeurs de la charge. Après que l'on ait atteint par craquage la gamme de poids moléculaire désirée, avec un abaissement correspondant des points d'ébullition, le catalyseur solide est séparé des produits obtenus, strippé, régénéré par combustion du coke formé, puis remis en contact avec la charge à craquer.

Les charges à craquer sont habituellement injectées dans la zone réactionnelle à une température généralement comprise entre 80 et 400°C, sous une pression relative de 0,7 à 3,5 bars, tandis que la température du catalyseur régénéré qui arrive dans cette zone peut être de l'ordre de 600 à 950°C.

Les conditions générales des réactions de craquage catalytiques sont particulièrement bien connues pour ne pas être répétées ici dans le cadre de la présente invention (voir par exemple US-A 3,293,192, 3,449,070, 4,415,438, 3,518,051, 3,607,043).

Les catalyseurs de cracking on craquage, de nos jours, sont à base d'une zéolithe.

On a découvert dans la présente invention qu'il était particulièrement intéressant d'utiliser la zéolithe L particulière de l'invention.

Le catalyseur de cracking utilisé dans la présente invention renferme en poids :

(a) 30 à 95 % d'au moins une matrice choisie notamment dans le groupe constitué par les silice alumines, les silices magnésies et les argiles, avec éventuellement à titre additionnel dans ladite matrice un autre solide choisi dans le groupe constitué par les alumines, la silice, la zircone, l'oxyde de bore, la magnésie, l'oxyde de titane ou une association de deux au moins des oxydes précédents,

(b) 5 à 70 % de la zéolithe L définie ci-dessus, cette zéolithe renfermant en outre éventuellement un ou plusieurs éléments métalliques couramment utilisés dans les catalyseurs de craquage, en particulier les métaux de la famille des terre-rares.

Le catalyseur utilisé dans l'invention peut également avantageusement renfermer des quantités minimes, inférieures à 1000 ppm par exemple, de rhénium ou d'un métal noble de la famille du platine (platine, palladium, iridium, osmium, rhodium, ruthénium,) et/ou un autre métal (par exemple 0,01 à 5 %) sous forme d'oxyde notamment, tel que le manganèse, le fer, le cobalt, le chrome et le manganèse, etc...

Les exemples 9 et 10 concernent plus particulièrement l'aspect craquage catalytique.

La présente invention concerne également un procédé d'isomérisation de paraffines en présence du catalyseur renferment la zéolithe L, décationisée, désaluminée et stabilisée.

L'isomérisation des paraffines normales de faible poids moléculaire est d'une importance considérable dans l'industrie pétrolière, vu l'indice d'octane particulièrement élevé des isoparaffines.

Il est intéressant de pouvoir transformer les n-paraffines $C_4$-$C_7$ et surtout $C_5$-$C_6$ en isoparaffines afin d'obtenir un carburant à haut indice d'octane. Ce procédé est intéressant pour améliorer les fractions d'essence légère et en particulier, les fractions de tête de distillation directe.

On a découvert dans la présente invention qu'il était particulièrement intéressant d'utiliser un nouveau type de catalyseur renfermant la zéolithe L particulière conforme à l'invention.

Pour les réactions d'isomérisation de paraffines, il convient que le catalyseur à base de la zéolithe L selon l'invention renferme en outre 0,1 à 5 % d'au moins un métal noble de la famille du platine.

L'isomérisation de paraffines sera illustrée dans les exemples 11, 12 et 13.

L'invention concerne enfin un procédé d'hydrocraquage de coupes pétrolières en présence d'un catalyseur à base de la zéolithe L selon l'invention.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que celle issue du craque catalytique.

Les catalyseurs utilisés dans l'art antérieur en hydrocraquage sont tous du type bifonctionnel associant une fonction acide à une fonction hydrogénante. La fonction acide est apportée par des supports généralement de grandes surfaces (150 à 800 $m^2.g^{-1}$ environ) présentant une acidité superficielle, tels que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, tels que le nickel, le palladium ou le platine par exemple, soit par une association d'au moins deux métaux choisis parmi les groupes VI de la classification périodique, (molybdène et tungstène notamment) et VIII de la même classification, (cobalt et nickel notamment), deux au moins des métaux de cette association appartenant à deux groupes différents (VI et VIII précédemment cités).

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (≥390°C environ), et à vitesse spatiale d'alimentation faible (la VVH exprimée en volume de charge traitée par unité de volume de catalyseur et par heure est généralement inférieure à 2), ais dotés d'une très bonne sélectivité en distillats moyens. Inversement, une fonction acide forte et une fonction hydrogénante faible donnent des catalyseurs très actifs mais présentant une mauvaise sélectivité en distillats moyens.

On trouve encore des catalyseurs conventionnels de l'hydrocraquage catalytique qui sont, constitués de supports faiblement acides, tels les silice-alumines amorphes par exemple. Ces systèmes sont utilisés pour produire des distillats moyens de très bonne qualité, ou encore, lorsque leur acidité est très faible, des bases huiles.

Dans les supports peu acides, on trouve la famille des silice-alumines amorphes. Beaucoup de catalyseurs du marché de l'hydrocraquage sont constitués de silice-alumine associée, soit à un métal du groupe VIII soit, de préférence quand les teneurs en poisons hétéroatomiques de la charge à traiter dépassent 0,5 % poids, à une association des sulfures des métaux des groupes VI B et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les zéolithes acides présentent l'avantage par rapport aux autres supports acides précédemment cités, d'apporter une acidité beaucoup plus élevée. Les catalyseurs nouveaux qui les contiennent sont donc beaucoup plus actifs et pour cette raison, permettent de travailler à température plus basse et/ou à vitesse spatiale d'alimentation (VVH) plus élevée. En revanche, cette acidité plus élevée modifie l'équilibre entre les deux fonctions catalytiques, acide et hydrogénante. Il en résulte une modification de sélectivité notable de ces catalyseurs par rapport aux catalyseurs conventionnels : ils sont plus craquants et produisent par conséquent beaucoup plus d'essence que de distillats moyens.

On a découvert ici qu'il était avantageux d'utiliser, pour l'hydrocraquage un type de catalyseur zéolithique, renfermant

a) une zéolithe L conforme à l'invention dont les caractéristiques physiques et l'acidité ont été spécialement modifiées, et

b) une matrice amorphe à base d'alumine ou d'une combinaison d'oxydes qui seront définis plus loin. Ce type de catalyseur présente une activité et une sélectivité en distillats moyens notablement améliorées par rapport aux autres systèmes de l'art antérieur à base de zéolithes.

Plus particulièrement l'invention concerne un catalyseur renfermant en poids :

(a) environ 20 à 98 % (de préférence 50 à 95 %) d'une matrice choisie dans le groupe constitué par au moins l'alumine, la silice, la silice-alumine, l'alumine-oxyde de bore, la magnésie, la silice-magnésie, la zircone, l'oxyde de titane, l'argile,

(b) 2 à 80% d'une zéolithe particulière L décrite précédement,

(c) au moins un métal ou un composé de métal choisi dans le groupe constitué par les métaux nobles ou non nobles du groupe VIII de la classification périodique des éléments, la concentration en métal ou métaux nobles du groupe VIII, exprimée en poids de ce ou ces métaux, étant comprise entre 0,01 et 5 % (de préférence 0,03 et 3 %) la concentration en métal ou métaux non nobles du groupe VIII, exprimée en poids de ce ou ces métaux, étant comprise entre 0,01 et 15 % (de préférence 0,05 à 10 %).

Le catalyseur décrit ci-dessus convient particulièrement pour les réactions d'hydrocraquage d'hydrocarbures. Un catalyseur d'hydrocraquage contenant une zéolithe définie ci-dessus testé avec un résidu sous vide hydrotraité ou une autre charge lourde classique de l'hydrocraquage est beaucoup plus actif et sélectif en distillats moyens, qu'un catalyseur contenant une zéolithe L non modifiée. Sans préjuger des raisons de cette amélioration par rapport à une zéolithe L non modifée, on peut dire que le type de traitements adopté a modifié la nature et la force de la fonction acide du catalyseur ainsi que l'accessibilité du site aux molécules lourdes hydrocarbonées, lesquelles comprennent typiquement 20 à 40 atomes de carbone.

La zéolithe dont les caractéristiques satisfont aux critères définis précédemment est dispersée dans une matrice généralement amorphe à base d'alumine, de silice, de silice-alumine, d'alumine-oxyde de bore, de magnésie, de silice-magnésie, de zircone, d'oxyde de titane ou à base d'une combinaison de deux au moins des oxydes précédents, ou encore, à base d'une argile, ou d'une combinaison des oxydes précédents avec de l'argile, Cette matrice a essentiellement pour rôle d'aider à mettre en forme la zéolithe, autrement dit à la produire sous forme d'agglomérats, billes, extrudés, pastilles etc..., qui pourront être placés dans un réacteur industriel. La proportion de matrice dans le catalyseur est d'environ 20 à 98 % en poids et de préférence 50 à 95 %.

Le composant d'hydro-déshydrogénation du catalyseur de la présente invention est par exemple un composé d'un métal du groupe VIII de la classification périodique des éléments, (notamment le nickel, le palladium ou le platine), ou une combinaison d'au moins deux des composés précédents, ou une combinaison de composés de métaux (oxydes notamment) des groupes VI (molybdène et/ou tungstène notamment) et des métaux non nobles du groupe VIII (cobalt et/ou nickel notamment) de la classification périodique des éléments.

Comme indiqué plus haut, le catalyseur final doit comprendre entre 2 et 80 % poids de zéolithe L spécialement modifiée, et de préférence entre 3 et 50 %. Les concentrations des composés métalliques, exprimées en poids de métal sont les suivantes : 0,01 à 5 % poids de métaux du groupe VIII, et de préférence entre 0,03 et 3 % poids, dans le case où il s'agit uniquement de métaux nobles du type palladium ou platine, 0,01 à 15 % poids de métaux du groupe VIII, et de préférence entre 0,05 à 10 % poids, dans le cas où il s'agit de métaux non nobles du groupe VIII du type nickel par exemple ; lorsqu'on utilise à la fois au moins un métal ou composé de métal du groupe VIII et au moins un composé d'un métal du groupe VI, on pourra employer environ 5 à 40 % en poids d'une combinaison d'au moins un composé (oxyde notamment) d'un métal du groupe VI (molybdène ou tungstène notament) et d'un moins un métal ou composé de métal un groupe VIII (cobalt ou nickel notamment) et de préférence 12 à 30 %, avec un rapport pondéral (exprimé en oxydes métalliques) de métaux du groupe VIII sur métaux du groupe VI compris entre 0,05 et 0,8 et de préférence entre 0,13 et 0,5.

La fonction hydrogénante telle qu'elle a été définie précédemment (métaux du groupe VIII ou association d'oxydes de métaux des groupes VI et VIII) peut être introduite dans le catalyseur à divers niveaux de la préparation et de diverses manières.

Elle peut être introduite en partie seulement (cas des associations d'oxydes de métaux des groupes VI et VIII) ou en totalité au moment du malaxage de la zéolithe avec le gel d'oxyde choisi comme matrice. Elle peut être introduite par une ou plusieurs opérations d'échange ionique sur le support calciné constitué de la zéolithe dispersée dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (Co et/ou Ni notamment) lorsque les précurseurs des oxydes des métaux du groupe VI (Mo et/ou W) ont été préalablement introduits au moment du malaxage du support. Elle peut enfin être introduite par une ou plusieurs opérations d'imprégnation du support calciné constitué de zéolithe et de la matrice, par des solutions contenant les précurseurs des oxydes de métaux des groupes VI et/ou VIII, les précurseurs des oxydes des métaux du groupe VIII étant de préférence introduits après ceux du groupe VI ou en même temps que ces derniers. Les principaux sels précurseurs qui peuvent être utilisés sont par exemple :

pour le groupe VIII (cobalt ou nickel) : nitrate, acétate, sulfate des cations bivalents hydratés ou des cations hexamines

$Co(NH_3)_6^{2+}$ et $Ni(NH_3)_6^{2+}$

pour le groupe VI (Mo et W) : les divers molybdates ou tungstates d'ammonium connus.

Dans le cas où les oxydes des métaux sont introduits en plusieurs imprégnations des sels précurseurs correspondants, une étape de calcination intermédiaire du catalyseur pourra être effectuée à une température comprise entre 250 et 600°C.

L'imprégnation du molybdène ou de tungstène peut être facilitée par ajout d'acide phosphorique dans les solutions de paramolybdate d'ammonium. Il est également possible de procéder à une imprégnation molybdène nickel en présence d'acide phosphorique.

Les catalyseurs ainsi obtenus conviennent particulièrement pour l'hydrocraquage de coupes lourdes, et présentant une activité améliorée par rapport à l'art antérieur, et ont de plus une sélectivité améliorée pour la production de distillats moyens de très bonne qualité.

Les charges employées dans ce procédé sont des distillats atmosphériques ou sous vide, des résidus désasphaltés ou hydrotraités ou équivalents. Elles sont constituées au moins à 80 % en volume de composés dont les points d'ébullition sont situés entre 350 et 580°C. Elles contiennent des hétéroatomes tels que soufre et azote. Les conditions de l'hydrocraquage telles que température, pression, taux de recyclage d'hydrogène, vitesse volumique horaire, doivent être adaptées à la nature de la charge, caractérisée notamment par la gamme des points d'ébullition, la teneur en aromatiques ou polyaromatiques, la teneur en hétéroatomes. les teneurs en azote sont comprises généralement entre 5 et 2000 ppm, et les teneurs en soufre entre 50 et 30.000 ppm.

La température est en général supérieure à 230°C et souvent comprise entre 300°C et 430°C. La pression est supérieure à 15 bars et en général supérieure à 30 bars. Le taux de recyclage d'hydrogène est au minimum de 100 et souvent compris entre 260 et 3000 litres d'hydrogène par litre de charge. La vitesse volumique horaire est comprise en général entre 0,2 et 10.

Les réactions d'hydrocraquage en présence de tels catalyseurs seront illustrés dans les exemples 14 à 17.

**<u>EXEMPLE 1 :</u> Préparation d'une zéolithe de type L, décationisée, désaluminée et stabilisée de rapport**

$$\frac{SiO_2}{Al_2O_3} = 15$$

On utilise une zéolithe de type L (appelée L00) de composition chimique moléculaire 9K ; $9AlO_2$ ; 27 $SiO_2$ contenant 14,4 % en poids de potassium, synthétisée par Toyo Soda que l'on prend donc comme référence L00.

Cette zéolithe est synthétisée en présence de sodium en faible proportion telle que $K^+/(K^+ + Na^+)$ = 0,98,

$(SiO_2/Al_2O_3)$ molaire = 6 ; $\vec{a}$ = 1.84 nm ; $\vec{c}$ = 0,752.

Teneur en potassium : 14,4 % poids

Un lot de 100 g de zéolithe L00 est échangé trois fois dans une solution de nitrate d'ammonium 10N pendant 4 h à ébullition avec un rapport volume de solution sur poids de solide égal à 4 $cm^3g^{-1}$. Après chaque échange le solide est filtré et rincé. Le produit obtenu est référencé L 01 et contient alors 3 % en poids de potassium. Après séchage à l'étuve, le solide L 01 est calciné sous air sec (VVH = 3 $l.h^{-1}.g^{-1}$) à une température de 400°C pour obtenir la zéolithe notée L 02 (montée en température 2°C/mn, palier de 2 h à 400°C). Le solide L 02 est échangé trois fois dans les conditions de l'échange cationique effectué précédemment pour obtenir le solide L01. Le produit obtenu, référencé L 03, ne contient plus que 0,4 % en poids de potassium.

Les caractéristiques des solides L00, L01, L02, et L03 sont reportées dans les tableau 1.

**<u>TABLEAU 1</u>**

| Référence | $SiO_2/Al_2O_3$ moles | % K en pds | $\vec{a}$ (nm) | $\vec{c}$ (nm) | % DX | $N_2$ (% poids) P/Ps = 0,19 | $C_6H_6$ (% poids) P/Ps : 0,25 |
|---|---|---|---|---|---|---|---|
| L00 | 6 | 14,4 | 1,836 | 0,752 | 100 | 11.4 | 8,4 |
| L01 | 6 | 3,0 | 1,844 | 0,754 | 105 | nd | 8,8 |
| L02 | 6 | 3,0 | 1,826 | 0,753 | 97 | nd | $\geqslant$ 8,8 |
| L03 | 6 | 0,4 | 1,835 | 0,752 | 102 | nd | $\geqslant$ 8,9 |

Ainsi que l'attestent les mesures de diffraction des rayons X, d'adsorption de $N_2$ et de $C_6H_6$, on a obtenu avec le solide L03, une zéolithe L fortement décationisée dont la structure cristalline est restée intacte.

Le solide L03 est soumis à deux traitements successifs ; un self-steaming ou une calcination sous vapeur d'eau puis une attaque acide. Les référence des solides sont indiquées sur le schéma suivant :

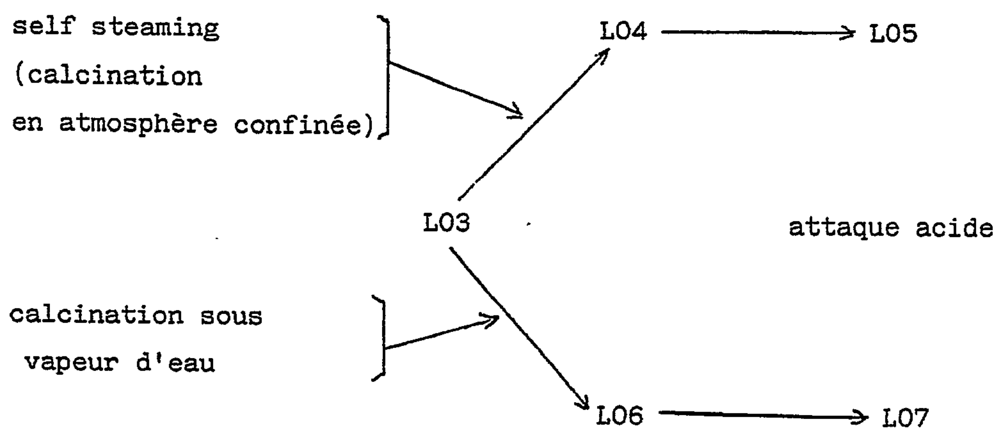


Les conditions opératoires des différents traitements sont détaillés ci-après :

**<u>Self steaming</u>** : (Calcination en atmosphère confinée, c'est-à-dire avec un débit de gaz extérieur nul, la vapeur d'eau nécessaire au traitements étant apportée par le produit lui-même).

Le solide L03 préalablement chargé dans un réacteur en quartz est enfourné dans un four chauffé à 650°C. Le traitements est effectué sous atmosphère statique et sa durée est de 4 heures.

**<u>Calcination sous vapeur d'eau</u>** :

- vitesse de montée en température 10°C $nm^{-1}$,
- débit d'air 3 $lh^{-1}g^{-1}$,
- injection d'eau à 400°C et débit 2,25 $cm^3$ $h^{-1}g^{-1}$ d'eau liquide soit une teneur molaire en vapeur d'eau de 50 %,
- température finale 650°C et palier de 4 heures à cette température,
- descente à l'ambiante sous air, débit 6 $lh^{-1}g^{-1}$.

**<u>Attaque acide</u>** :

- HCl, 0,6N,
- V/P = 10 $cm^3$/g (V/p = volume de la solution d'échange par poids de solide)
- T = 80°C,
- durée 4 heures sous agitation.

Le tableau 2 donne les caractéristiques physicochimiques des différents solides obtenus.

TABLEAU 2.

| Référence | $SiO_2$/$Al_2O_3$ moles | % K poids | $\vec{a}$ (nm) | $\vec{c}$ (nm) | % DX | $N_2$ % pds P/Ps = 0,19 | $C_6H_6$ (% pds) P/Ps = 0,25 |
|---|---|---|---|---|---|---|---|
| L04 | 6 | 0,4 | 1,795 | 0,752 | 95 | 5,2 | |
| L05 | 15 | 0,25 | 1,794 | 0,752 | 89 | 16,2 | 12,6 |
| L06 | 6 | 0,4 | 1,796 | 0,752 | 96 | 4,8 | |
| L07 | 15 | 0,25 | 1,795 | 0,752 | 87 | 15,9 | 12,9 |

Les résultats de diffraction X montrent que les solides L04, L05, L06 et LO7 sont bien cristallisés. Après la calcination en présence de vapeur d'eau, les solides L04 et L06 ont une faible capacité d'adsorption d'azote et de benzène en raison de la présence dans les pores des espèces aluminiques extraites de la charpente sous l'effet de la vapeur d'eau à haute température.

L'élimination de tout ou partie de ces espèces aluminiques extra réseau sous l'effet de l'attaque acide permet de restaurer les capacités d'adsorption des solides sans altérer la cristallinité mesurée par diffraction X. Les solides L05 et L07 possèdent un réseau de pores secondaires créé au cours des traitements modificateurs. Les rayons de ces pores secondaires sont centrés aux alentours de 3 nm avec une distribution comprise dans la fourchette 1.5-20 nm. Volume des pores secondaires par rapport au volume poreux total : 29%.

Les zéolithes décationisées et désaluminées L05 et L07 sont caractérisées par une stabilité thermique nettement améliorée par rapport au solide de départ. Après une calcination effectuée sous un débit d'air sec de 10 l $h^{-1}g^{-1}$ à 900°C pendant 4 heures les taux de cristallinité DX sont encore pour L05 et L07 respectivement égaux à 70 et 75 % alors que ce type de traitement conduit à la destruction quasi complète des solides non stabilisés (L00, L01, L02, L03). On a donc obtenu des solides très fortement décationisés, possédant un rapport $SiO_2/Al_2O_3$ qui a plus que doublé par rapport à celui du solide initial et dont la stabilité thermique est considérablement améliorée.

**EXEMPLE 2 : Préparation d'une zéolithe L, décationisée, désaluminée et stabilisée de rapport**

$$\frac{SiO_2}{Al_2O_3} = 30.$$

Il est possible de faire varier le rapport $SiO_2/Al_2O_3$ de la zéolithe L dans une large gamme en modifiant la température et/ou la teneur en vapeur d'eau des traitements thermiques et/ou la force de l'attaque acide.

Les conditions opératoires utilisées sont identiques à celles de l'exemple 1 avec calcination sous vapeur d'eau sauf la calcination qui a été effectuée à 730°C et l'attaque acide qui a été menée dans une solution HCl 1,8N à 100°C. Le solide obtenu après attaque acide est référence L09. Nous donnons dans le tableau 3 les caractéristiques physicochimiques des solides obtenus.

TABLEAU 3

| REFERENCE | $SiO_2$ / $Al_2O_3$ moles | % K poids | $\vec{a}$ (nm) | $\vec{c}$ (nm) | % DX | $N_2$ (%pds) P/Ps=0,19 | $C_6H_6$ (% pds) P/Ps= 0,25 |
|---|---|---|---|---|---|---|---|
| L09 | 30 | < 0.2 | 1,793 | 0,752 | 91 | 16,5 | 12,1 |

Comme précédemment la cristallinité DX du solide reste très bonne. A titre d'exemple les caractéristiques du spectre de diffraction X de L09 sont détaillées dans le tableau 4. Le solide L09 est caractérisé par un réseau de pores secondaires centrées en rayon autour de 3.2 nm et dont la distribution est comprise dans la fourchette 1.5-20 nm. Volume des pores secondaires par rapport au volume poreux total: 54%.

La stabilité thermique de L09, comme celle de L05 et L07 reste excellente puisque ce solide conserve une cristallinité DX supérieure à 77 % après une calcination sous air sec (15 l $h^{-1}g^{-1}$) à 900°C pendant 4 heures.

TABLEAU 4

Caractéristiques du diagramme de diffraction X de L09.

| I/Io | 2 θ | d(Å) |
|---|---|---|
| 100 | 5.69 | 15.53 |
| 25 | 9.86 | 8.97 |
| 12 | 11.71 | 7.56 |
| 21 | 13.03 | 6.79 |
| 62 | 15.09 | 5.87 |
| 52 | 15.33 | 5.78 |
| 37 | 16.37 | 5.41 |
| 13 | 17.13 | 5.18 |
| 43 | 19.80 | 4.48 |
| 28 | {22.90 | {3.88 |
| | {23.06 | {3.86 |
| 31 | 24.24 | 3.67 |
| 23 | 25.58 | 3.48 |
| 36 | 26.23 | 3.40 |
| 20 | 27.68 | 3.22 |
| 33 | 28.74 | 3.11 |
| 19 | 29.26 | 3.05 |
| 20 | 29.89 | 2.99 |
| 18 | 30.95 | 2.89 |
| 10 | 32.73 | 2.74 |
| 10 | 34.26 | 2.62 |
| 9 | 34.65 | 2.59 |
| 9 | 35.64 | 2.52 |

**EXEMPLE 3: Préparation d'une zéolithe L décationisée, désaluminée et stabilisée de rapport $SiO_2/Al_2O_3$ = 82.**

L'obtention de rapports $SiO_2/Al_2O_3$ élevés peut se faire soit en augmentant la sévérité du traitement sous vapeur d'eau soit en faisant subir au solide des cycles calcination-attaque acide. Dans cet exemple nous illustrons la deuxième possibilité.

Le solide de départ est L07 de l'exemple 1. On fait subir successivement à L07 le traitement suivant :
- self steaming à 750°C pendant 4 heures,
- attaque acide dans HCl 3N avec un rapport V/P égal à 10 $cm^3g^{-1}$, à 100°C pendant 4 heures sous agitation.

Le solide obtenu après l'attaque acide est référencé L11, ses caractéristiques physico-chimiques sont rassemblées dans le tableau 5.

TABLEAU 5

| REFERENCE | $SiO_2$ / $Al_2O_3$ moles | % K poids | $\vec{a}$ (nm) | $\vec{c}$ (nm) | % DX | $N_2$ % pds P/Ps=0,19 | $C_6H_6$ (% pds) P/Ps= 0,25 |
|---|---|---|---|---|---|---|---|
| L11 | 82 | <0,15 | 1,790 | 0,752 | 90 | 17,8 | 13,0 |

Comme les solides décationisés, désaluminés et stabilisés L05, L07, L09, le produit L11 est caractérisé par un réseau de pores secondaires centré en rayon autour de 3 nm. La stabilité thermique de L11 se compare favorablement à celle des solides obtenus par les exemples 1 et 2. Après une calcination sous air sec à 900°C (10 l $h^{-1}g^{-1}$) pendant 4 heures la cristallinité DX de L11 est encore égale à 75 %. Volume de pores secondaires par rapport au volume poreux total: 63%.

**EXEMPLE 4: Préparation d'une zéolithe de type L décationisée, dés aluminée et stabilisée de rapport $SiO_2/Al_2O_3$ = 200.**

On utilise comme dans l'exemple 3 des cycles calcination sous vapeur d'eau-attaque acide.

On part du solide préparé à l'issu de l'exemple n° 3 soit L11 auquel on fait subir un échange cationique avec une solution de nitrate d'ammonium 10N dans les conditions définies dans l'exemple 1 le solide obtenu est référencé L12.

A partir du solide L12 on procède à un self steaming à 800°C puis à une attaque acide dans les conditions suivantes :
- HCl 5N,
- V/P = 15 $cm^3/g$,
- T = 100°C,
- durée 4 heures avec agitation.

Le solide obtenu à l'issu de ces traiutements est référencé L14. On présente ses caractéristiques physico-chimiques dans le tableau 6.

TABLEAU 6

| REFERENCE | $\frac{SiO_2}{Al_2O_3}$ moles | % K poids | $\vec{a}$ (nm) | $\vec{c}$ (nm) | % DX | $N_2$ (% pds) P/Ps=0,19 | $C_6H_6$ (% pds) P/Ps=0,25 |
|---|---|---|---|---|---|---|---|
| L14 | 200 | $<$0,10 | 1,788 | 0,751 | 85 | 18,3 | 12,8 |

Le solide L14 possède une cristallinité DX et des capacités d'adsorption d'azote et de benzène très bonnes. Son réseau de pores secondaires est toujours centré aux alentours de 3 nm en rayon avec une distribution assez large qui s'étend de 1.5 à 20 nm. La stabilité thermique de ce solide est excellente puisqu'après une calcination à 950°C sous air sec (15 l $h^{-1}g^{-1}$) pendant 4 heures le taux de cristallinité est de 77 %.

**EXEMPLE 5 : Préparation d'une zéolithe de type L décationisée, déaluminée et stabilisée de rapport**

$$\frac{SiO_2}{Al_2O_3} = 25.$$

Comme expliqué plus haut les étapes d'échange cationique visant à préparer une zéolithe L de faible teneur en potassium peuvent se faire dans des solutions de sel d'ammonium ionisable ou/et dans des solutions d'acide minéral ou organique de faible concentration. Cet exemple illustre la seconde possibilité.

Le solide de départ est la zéolithe L02 dont la préparation et les caractéristiques physicochimiques sont décrites dans le tableau 1 de l'exemple n° 1.

Pour éliminer une partie des 3,0 % de cations potassium résiduels, la seconde série d'échanges ioniques après calcination sous air sec à 400°C est faite dans des solutions d'acide chlorhydrique 0,01 N dans les conditions suivantes :

- HCl 0,01 N,
- V/P = 20,
- T = 50°C (température ambiante),
- durée 4 heures avec agitation.

Après une série de 5 échanges cationiques la teneur en potassium est de 0,6%. Le solide obtenu est référencé L15.

Cette zéolithe subit alors un self steaming à 690°C puis est attaquée à l'acide selon les conditions définies dans l'exemple n° 1. Le solide est référencé L17 après attaque acide. On présente ses caractéristiques physicochimiques dans le tableau 7.

TABLEAU 7

| REFERENCE | $\frac{SiO_2}{Al_2O_3}$ moles | % K poids | $\vec{a}$ (nm) | $\vec{c}$ (nm) | % DX | $N_2$ (% pds) P/Ps =0,19 | $C_6H_6$ (% pds) P/Ps= 0,25 |
|---|---|---|---|---|---|---|---|
| L15 | 6 | 0,6 | 1,825 | 0,752 | 91 | 16.5 | 10.0 |
| L17 | 25 | 0,4 | 1,793 | 0,752 | 89 | 16,0 | 12,0 |

**EXEMPLE 6: Préparation d'une zéolithe de type L décationisée, déaluminée et stabilisée de rapport**

$$\frac{SiO_2}{Al_2O_3} = 42.$$

L'obtention d'une zéolithe L décationisée à faible teneur en potassium sans altération de la cristallinité du solide peut se faire en utilisant un ou des cycles échanges ioniques, calcination sous air sec, échanges ioniques et/ou par échanges ioniques seuls dans des solutions d'acide organique ou minéral de concentration inférieure à 0,1 N. Cet exemple illustre cette seconde possibilité.

La teneur en potassium d'une zéolithe L Toyo Soda est abaissée à 0,7 % par une série de 9 échanges ioniques dans une solution d'acide chlorhydrique dans les conditions suivantes :
- HCl 0,01 N,
- V/P = 50,
- T = 30°C

durée 4 heures avec agitation.

Ce solide référencé L18, fortement décationisé, est ensuite déaluminé et stabilisé par un traitement analogue à ceux utilisés dans les exemples précédents : self steaming à 770°C pendant 4 heures puis attaque acide dans une solution d'acide chlorhydrique 3N 9V/P = 10, T = 100°C, t = 4 heures), les solides après self steaming et attaque acide sont respectivement référencés L19 et L20. Les caractéristiques physicochimiques des différents solides obtenus sont présentées dans le tableau 8.

TABLEAU 8

| REFERENCE | $SiO_2$ / $Al_2O_3$ moles | % K poids | $\vec{a}$ (nm) | $\vec{c}$ (nm) | % DX | $N_2$ (% pds) P/Ps= 0,19 | $C_6H_6$ (% pds) P/Ps= 0,25 |
|---|---|---|---|---|---|---|---|
| L18 | 6 | 0,7 | 1,819 | 0,753 | 87 | 13 % | 11,9 |
| L19 | 6 | 0,7 | 1,791 | 0,755 | 85 | 4 % | ND |
| L20 | 42 | 0,2 | 1,791 | 0,752 | 80 | 15,3 | 12,8 |

Le produit L20 est caractérisé par un réseau de pores secondaires et une stabilité thermique tout à fait similaire à celle de L09 de l'exemple 2.

**EXEMPLE 7: (comparatif) Importance des conditions opératoires de l'étape de calcination intermédiaire (étape 2) intevenant lors de la décationisation de la zéolithe L.**

Cet exemple montre que la calcination intermédiaire du solide nécessaire à la décationisation poussée doit être conduite en l'absence ou en présence de très faibles quantités de vapeur d'eau. Le solide L01 préparé dans l'exemple n° 1 contenant 3 % de potassium est calciné à 450°C dans les conditions suivantes :

- montée en température 2°C/mn,
- débit d'air 1,5 l $h^{-1}g^{-1}$,
- palier de 2 heures à 450°C,
- injection d'eau pendant le palier à 450°C avec un débit tel que la teneur en vapeur d'eau est de 50 %.

Le solide obtenu est référencé L21. Celui-ci est échangé 3 fois dans une solution de nitrate d'ammonium 10N pour aboutir à L22 contenant 0,8 % en poids en potassium. L22 est self steamé à 750°C (L23) puis attaqué à l'acide 3N (L24).

On constate que le solide obtenu (L24) non seulement conserve un rapport ($SiO_2/Al_2O_3$) molaire faible (de l'ordre de 20) mais est détruit du point de vue de sa cristallinité DX ( 20 %).

**EXEMPLE 8: (comparatif) Inefficacité de l'attaque acide directe de la zéolithe L pour préparer un solide décationisé, désaluminé et stabilisé (cinquième étape effectuée directement).**

Cet exemple illustre le fait qu'une attaque acide directe permet d'obtenir un solide décationisé, désaluminé mais non stabilisé.

On a fait subir à deux échantillons définis plus loin de zéolithe L une attaque acide dans les conditions suivantes : HCl 1N, température 100°C et rapport volume de solution sur poids de zéolithe égal à 5 $cm^3.g^{-1}$. Ces deux échantillons sont, d'une part, la zéolithe L00 brute de synthèse contenant 14,4 % en poids de potassium et, d'autre part, le solide L01 de l'exemple n° 1 contenant 3,0 % en poids de potassium. Les solides obtenus à l'issue de ce traitement sont référencés respectivement L25 et L26.

Ainsi que l'attestent les données physicochimiques du tableau 9, les solides sont, dans les deux cas, détruits du point de vue de la cristallinité DX.

TABLEAU 9

| REFERENCE | $\frac{SiO_2}{Al_2O_3}$ mole | % K | % DX |
|---|---|---|---|
| L25 | 45 | 1,8 | 13 |
| L26 | 52 | 1,3 | 10 |

**EXEMPLE 9: Préparation d'une zéolithe L désaluminée de rapport**

$$\frac{SiO_2}{Al_2O_3} = 15,$$

rétroéchangée aux terres rares.

Dans une première étape on prépare une zéolithe L désaluminée et stabilisée de rapport $SiO_2/Al_2O_3$ égal à 30, conformément à l'exemple 2 ; on obtient donc une zéolithe L dont les caractéristiques physicochimiques sont celles de L09 (exemple n° 2).

Sur 100 g de zéolithe L09 on procède à un échange dans 1000 cm³ d'une solution de terres rares de molarité en terrres rares égale à 0,15N. L'échange est réalisé à 100°C pendant 4 heures. Durant la durée de l'échange, le pH est contrôlé et maintenu entre 5 et 5,5. La composition du mélange de terres rares utilisé pour effectuer l'échange est la suivante, en poids :

$La_2O_3$= 57 % poids
$CeO_2$ = 15 % poids
$Nd_2O_3$= 21 % poids
$Pr_6O_{11}$ = 7 % poids.

A l'issue de l'échange, on obtient une zéolithe L désaluminée contenant des terres rares, dont la teneur totale exprimée en oxydes de terres rares est de 4,5 %. Le solide ainsi échangé conserve le rapport $SiO_2/Al_2O_3$ de L09 ainsi que le spectre de diffraction X de la zéolithe L ; il est référencé L09R.

**EXEMPLE 10: Tests de vieillissement hydrothermique et mesure des performances catalytiques en micro-unité.**

Les diverses zéolithes obtenues dans les exemples 1 à 4 sont pastillées puis reduites en petits agrégats à l'aide d'une machine à concasser. La fraction comprise entre 40 microns et 200 microns est ensuite recueillie par tamisage.

Chacune des poudres ainsi obtenues est soumise au traitement hydrothermique suivant : 8 heures à 750°C sous 1 bar de pression partielle de vapeur d'eau.

Après ce traitement, les paramètres cristallins des divers échantillons ont changé. Les nouvelles valeurs sont présentées dans le tableau 9.

Cet exemple a simplement pour but de simuler un vieillissement industriel sur une zéolithe neuve. La zéolithe L04 utilisée à titre d'exemple comparatif.

TABLEAU 9.

**Paramètres cristallins des diverses zéolithes après traitement hydrothermique.**

| Type de la zéolithe entrant dans la composition du catalyseur | L04 | L05 | L09 | L11 | L09R |
|---|---|---|---|---|---|
| $a_{nm}$ | 1,792 | 1,791 | 1,791 | 1,790 | 1,793 |
| $c_{nm}$ | 0,752 | 0,752 | 0,752 | 0,751 | 0,752 |
| adsorption d'azote P/Ps = 0,19 | 2,5 | 6,5 | 15,0 | 17,1 | 14,0 |

A partir des échantillons vieillis, 5 catalyseurs de craquage sont préparés en diluant les zéolithes à raison de 20 % en poids dans une silice amorphe de granulométrie contrêlée comparable à celle des zéolithes. 4 g de chacun de ces catalyseurs sont introduits dans le réacteur d'une micro-unité de test MAT. L'aptitude de chaque catalyseur à convertir un distillat sous vide (DSV) est ensuite déterminée dans les conditions suivantes :

- quantité de charge traitée : 1,3 g
- C/O = 3 (C/O : rapport du poids de catalyseur utilisé sur le poids de charge injectée.)
- durée de l'injection des 1,3 g de charge = 75 secondes en WHSV - vitesse spatiale massique = 15 $h^{-1}$
- température T = 480°C.

La charge utilisée (DSV) a les caractéristiques suivantes :

densité 15°C = 0,904
% pds S = 1,3
% pds N < 0,1
Carbone Conradson % - 0,32

Ni + V (ppm) < 1 | PI = 202°C

ASTM D 1160 .................. | 10 % = 307°C
| 50 % = 402°C
| 90 % = 510°C
| PF = 585°C.

Comparaison des performances catalytiques.

Les études sont exprimées de la manière suivante :

- conversion de la charge en % en poids
- rendement en gaz ($H_2$ + hydrocarbures de $C_1$ à $C_4$)
- rendement en essence $C_5$-220°C
- coke.

Le tableau 10 les présente pour les 6 catalyseurs utilisés.

**TABLEAU 10.**

**Résultats des tests MAT.**

| Performances catalytiques | Catalyseurs | | | | |
|---|---|---|---|---|---|
| | L04 | L05 | L09 | L11 | L09R |
| Conversion % pds | 19,7 | 30,3 | 53,1 | 51,5 | 57,7 |
| Gaz ($H_2$ + $C_1$ à $C_4$) | 5,1 | 7,5 | 13,4 | 13,0 | 14,4 |
| Essence $C_5$-210°C | 12,8 | 20,0 | 35,6 | 34,7 | 38,2 |
| Coke | 1,8 | 2,8 | 4,1 | 3,8 | 5,1 |

**EXEMPLE 11: Préparation d'un catalyseur A et d'un catalyseur A'. On se propose de préparer une zéolithe de type L, décationisée, désaluminée et stabilisée de rapport**

$$\frac{SiO_2}{Al_2O_3} = 15$$

On effectue la préparation des catalyseurs A et A' à l'aide des produits L05 et L07 obtenus à l'exemple 1.

Les produits obtenus L05 et L07 secs, sont imprégnés avec du platine selon la technique conventionnelle d'échange cationique avec compétition. On utilise du chlorure de platine tétrammine $Pt(NH_3)_4Cl_2$ avec du nitrate d'ammonium comme compétiteur. Les catalyseurs A et A' ainsi obtenus (respectivement à partir de L05 et L07) renferment chacun 0,4 % en poids de platine. Ils sont chargés, dans 2 expériences distinctes, dans une unité catalytique, en lit fixe, où ils sont d'abord réduits sous hydrogène à 450°C. Leurs performances figurent dans le tableau I. On obtient des conversions et des sélectivités supérieures à celles que l'on obtient avec un catalyseur conventionnel dont la préparation est donnée ci-dessous dans l'exemple 12.

**EXEMPLE 12: Préparation d'un catalyseur B (comparaison).**

La matière première est une mordénite petits pores référence Alite 150 de la Société Chimique de la Grande Paroisse. Sa formule chimique à l'état anhydre est : Na $AlO_2(SiO_2)_{5,5}$, et sa capacité d'adsorption de benzène est de 1 % en poids par rapport au poids de solide sec (volume de maille : 2,79 $nm^3$ ; teneur en sodium 5,3 % (poids), diamètre cinétique des molécules adsorbées : 3,8 x $10^{-10}$ m) 50 g de cette poudre sont plongés dans une solution 2M de nitrate d'ammonium et la suspension est portée à 95°C pendant deux heures.

Le volume de la solution de nitrate d'ammonium engagée est égal à 4 fois le poids de zéolithe sec (V/P = 4). Cette opération d'échange cationique est recommencée 3 fois. Après le 3ème échange, le produit est lavé à l'eau, à 20°C pendant 20 minutes avec un rapport V/P égal à 4. La teneur en sodium, exprimée en pourcentage en poids par rapport au poids sec passe de 5,5 à 0,1 %. Le produit est ensuite filtré et soumis à une calcination en atmosphère confinée à 600°C pendant 2 heures.

On procède ensuite à une attaque acide avec de l'acide chlorhydrique 0,58N, en portant le produit à reflux dans la solution aqueuse d'acide chlorhydrique à 90°C pendant 2 heures avec un rapport V/P égal à 8. Le produit est ensuite filtré, lavé à l'acide chlorhydrique 0,1N puis à l'eau.

Le rapport atomique Si/Al de cette mordénite est égal à 12, son volume de maille à 2,750 $nm^3$, son taux de sodium à 300 ppm et sa capacité d'adsorption de benzène à 9,6 % poids par rapport au poids de solide sec. La morphologie de cette mordénite est en forme d'aiguilles de longueurs moyennes 5 x $10^{-6}$ m dont

les faces sont hexagonales et ont une longueur d'environ 1 x $10^{-6}$m et une hauteur d'environ 0,3 x $10^{-6}$m. Cette mordénite ainsi modifiée est ensuite malaxée avec un liant de type bentonite ou aluminique puis ce mélange, contenant 25 % poids de liant est forcé au travers d'une filière. Les extrudés de diamètre 1,2 x $10^{-3}$m sont ensuite séchés et calcinés.

0,4 % de platine sont ensuite déposés sur ce support par échange cationique à partir de chlorure de platine tétrammine $Pt(NH_3)_4Cl_2$ avec du nitrate d'ammonium comme ion compétiteur. La quantité de sodium dans le catalyseur final est égale à 80 ppm. Le rapport atomique Si/Al est égal à 12 et le volume de maille à 2,750 $nm^3$. Les extrudés sont ensuite séchés puis calcinés à 500°C.

Le catalyseur ainsi obtenu est chargé dans une unité catalytique en lit fixe et réduit sous hydrogène à 450°C.

EXEMPLE 13 :

Dans l'exemple qui suit, les catalyseurs sont testés avec une charge de n-hexane dans les conditions suivantes : temérature 250°C, pression : 30 bars, poids de n-hexane par unité de poids de catalyseur et par heure : 2, rapport molaire hydrogène sur n-hexane : 2. Les performances indiquées dans le tableau 11 sont prises après 30 heures de mise en régime du catalyseur.

TABLEAU 11

| CATALYSEUR | CONVERSION | SELECTIVITE |
|---|---|---|
| A' | 80,0 | 98,6 |
| A | 79,9 | 98,5 |
| B | 79,5 | 98,3 |

Les performances sont exprimées en terme de conversion du n-hexane et de sélectivité en isomérisation et définies comme suit :

$$\text{Conversion} = \frac{\text{Masse de n-hexane entrée-masse de n-hexane sortie}}{\text{Masse de n-hexane entrée}} \times 100$$

$$\text{Sélectivité} = \frac{\sum(\text{Masse des isomères}) \times 100}{\sum(\text{Masse des produits de la réaction})}$$

**EXEMPLE 14: Préparation de zéolithes.**

On a préparé des zéolithes L01, L03, L05 et S à partir d'une matière première qui est une zéolithe L décrite dans l'exemple 1.

On a préparé les produits L01, L02, et L03 comme indiqué à l'exemple 1.
Comme dans l'exemple 1, le solide L03 est soumis à un traitement thermique en atmosphère confinée (self-steaming) puis à une attaque acide. Les références des solides sont redonnées sur le schéma suivant.

L03 —— Calcination en atmosphère confinée (self steaming) ——> L04 —— attaque acide ——> L05

Les conditions opératoires des deux traitements sont celles précisées à l'exemple 1.

Le rapport molaire silice/alumine de ce produit appelé zéolithe L05 est passé de 6 à 15, et le taux de potassium est de 0,25 %. Les valeurs d'adsorption d'azote montrent que la structure de la zéolithe est parfaitement conservée.

Le tableau 12 redonne les caractéristiques physicochimiques des différents solides obtenus.

TABLEAU 12

| Référence | $SiO_2$/$Al_2O_3$ moles | % K poids | $\vec{a}$ (nm) | $\vec{c}$ (nm) | % DX | $N_2$ % pds P/Ps = 0,19 | $C_6H_6$ (% pds) P/Ps = 0,25 |
|---|---|---|---|---|---|---|---|
| L04 | 6 | 0,4 | 1,795 | 0,752 | 95 | 5,2 | |
| L05 | 15 | 0,25 | 1,794 | 0,752 | 89 | 16,2 | 12,6 |
| S | 39 | 0,06 | 1,704 | 0,752 | 88 | 16,3 | 12,7 |

Les résultats de diffraction X montrent que les solides L04 et L05, sont bien cristallisés. Après la calcination en présence de vapeur d'eau, le solide L04 a une faible capacité d'adsorption d'azote et de benzène en raison de la présence dans les pores des espèces aluminiques extraites de la charpente sous l'effet de la vapeur d'eau à haute température.

On prépare une zéolithe S encore plus fortement désaluminée : elle est obtenue à partir de la zéolithe L05 par un traitement thermique en atmosphère confinée à 650°C pendant 4 heures, suivi d'un traitement acide par HCl 2N à reflux pendant 4 heures. Le rapport molaire silice alumine est de 39, la teneur en potassium de 0,06 %, et le produit est toujours bien cristallisé d'après le spectre de diffraction des rayons X et d'après la capacité d'adsorption d'azote.

Les caractéristiques de la zéolithe S sont données également dans le tableau 12.

L'élimination de tout ou partie des espèces aluminiques extra réseau sous l'effet de l'attaque acide permet de restaurer les capacités d'adsorption des solides sans altérer la cristallinité mesurée par diffraction X. Les solides L05 et S possèdent un réseau de pores secondaires créé au cours des traitements modificateurs. Les rayons de ces pores secondaires sont centrés aux alentours de 3 nm avec une distribution comprise dans la fourcette 1.5-20 nm. Volume des pores secondaires par rapport au volume poreux total : 29 %.

Les zéolithes décationisées et désaluminées L05 et S sont caractérisées par une stabilité thermique nettement améliorée par rapport au solide de départ. Après par exemple une calcination effectuée sous un débit d'air sec de 10 $lh^{-1}g^{-1}$ à 900°C pendant 4 heures les taux de cristallinité DX sont encore pour L05 et S respectivement égaux à 70 et 74 % alors que ce type de traitement conduit à la destruction quasi complète des solides non stabilisés (L00, L01, L02, L03). On a donc obtenu des solides très fortement décationisés, possédant un rapport $SiO_2/Al_2O_3$ qui a plus que doublé par rapport à celui du solide initial et dont la stabilité thermique est considérablement améliorée.

**EXEMPLE 15. Préparation des catalyseurs C1, C2, C3 et C4.**

Les catalyseurs sont préparés de la maière suivante : une alumine pseudo-boehmite fournie par la société CONDEA est peptisée par ajout d'acide nitrique puis malaxée.

Les catalyseurs C1, C2, C3 et C4 sont obtenus par mélange de cette pseudo boehmite avec respectivement les zéolithes préparées ci-dessus L01, L03, L05 et S.

Chaque zéolithe est introduite à raison de 40 g de zéolithe pour 100 grammes d'alumine puis malaxée ; la pâte obtenue, après ajustement de sa consistance par ajout de petites quantités d'eau, est forcée au travers d'une filière de diamètre 1,4 mm, puis séchée sous flux d'air à 120°C et calcinée à 550°C pendant une heure.

Après refroidissement, les catalyseurs sont imprégnés dans un drageoir rotatif par la technique dite de l'imprégnation à sec. La solution utilisée contient du paramolybdate d'ammonium, de l'acide phosphorique et du nitrate de nickel de façon à ce que chaque catalyseur contienne après calcination sous air à 500°C :

13 % d'oxyde de molybdène $MoO_3$
2,5 % d'oxyde de nickel NiO
4 % d'oxyde de phosphore $P_2O_5$.

**EXEMPLE 16.**

Les performances des catalyseurs C2 et C3 sont évaluées en hydrocraquage et comparées à celle du catalyseur C1.

Ces catalyseurs sont chargés dans une unité de test puis présulfurés par un gas oil routier additionné de 2 % poids de diméthyl disulfure à une température de 300°C et une pression de 60 bars.

La charge à hydrocraquer est un distillat sous vide qui a été préalablement hydrotraité sur un catalyseur bifonctionnel constitué de nickel et molybdène et d'un support de silice alumine. Pour simuler un procédé d'hydrocraquage, on a utilisé le résidu de ce distillat hydrotraité qui a les caractéristiques suivantes :

Distillation Point 5 % : 385
50 % : 455
95 % : 520
S (ppm) = 205
N (ppm) = 15

On incorpore dans cette charge pour être dans les conditions d'un schéma d'hydrocraquage avec réacteurs en série, 2,2 % poids de diméthyldisulfure et 0,9 % poids d'aniline.

La pression totale est de 140 bars et la température est fixée à 380°C.

Les résultats après une période de mise en régime de 60 heures sont les suivants, exprimés en terme de conversion en produits de point d'ébullition inférieur à 380°C.

| CATALYSEUR | CONVERSION % |
|---|---|
| C1 préparé à partir de L01 | 43 |
| C2 préparé à partir de L03 | 72 |
| C3 préparé à partir de L05 | 75 |

La comparaison des catalyseurs C1 (comparatif), et C2 permet de juger du bénéfice dû à la baisse du taux de potassium de 3 à 0,4 %. Quant au catalyseur C3, on constate qu'il est légèrement plus actif malgré une augmentation de 6 à 15 du rapport molaire silice alumine de la zéolithe.

**EXEMPLE 17.**

Les catalyseurs C1, (comparatif), C3 et C4 ont été testés ici dans des conditions plus sévères, c'est-à-dire à plus basse pression pour juger de la stabilité catalytique des divers systèmes.

La charges est alors la suivante :

Point 5 % : 365
Point 50 % : 443
Point 95 % : 517
S ppm : 350
N ppm : 40.

On ajoute à cette charge 2,4 % poids de diméthyldisulfure et 1,0 % poids d'aniline. La pression totale est de 90 bars et la température est ajustée de manière à obtenir une conversion brute égale à 75 %. On mesure cette temérature au bout de 50 heures (T1) et aussi au bout de 350 heures (T2) afin de juger de la désactivation du système catalytique.

Les résultats sont les suivants :

| CATALYSEUR | T1(°C) | T2(°C) |
|---|---|---|
| C1<br>Préparé à partir de L01 | 405 | 415 |
| C3<br>Préparé à partir de L05 | 390 | 394 |
| C4<br>Préparé à partir de S | 395 | 397 |

Le catalyseur C1 utilisé à titre de référence (comparatif) a une faible activité et une grande instabilité dans ces conditions opératoires.

Le catalyseur C4 est légèrement moins actif que le catalyseur C3, cela étant dû vraisemblablement au fait que la zéolithe S est plus désaluminée que la zéolithe L05. Le catalyseur C4 est cependant plus stable car la perte d'activité au bout de 350 heures n'est que de 2°C contre 4°C pour le catalyseur C3.

## Revendications

1. Zéolithe L de rapport molaire $SiO_2/Al_2O_3$ global au moins égal à 8 ayant une teneur en potassium inférieure à 2,9 % en poids, une teneur en sodium inférieure à 0,5 % en poids, des paramètres cristallins $\vec{a}$ et $\vec{c}$ respectivement inférieurs à 1,836 nm et 0,754 nm, une capacité d'adsorption d'azote, mesurée à 77 K sous une pression partielle P:Ps = 0,19, supérieure à 11 % en poids, une capacité d'adsorption de benzène déterminée à 30°C sous une pression partielle P/Ps = 0,25, supérieure à 8,5 % en poids, ladite zéolithe L possédant un réseau de pores secondaires (mésopores) dont les rayons sont compris entre 0,8 nm et 20 nm, le volume des pores secondaires représentant de 5 à 70 % du volume poreux total.

2. Zéolithe L selon la revendication 1 de rapport molaire $SiO_2/Al_2O_3$ global au moins égal à 12, ayant une teneur en potassium inférieure à 0,7 % en poids, un teneur en sodium inférieure à 0,5 % en poids, des paramètres cristallins $\vec{a}$ et $\vec{c}$ respectivement inférieurs à 1,815 nm et 0,752 nm, une capacité d'adsorption d'azote, mesurée à 77 K sous une pession partielle P/Ps = 0,19, supérieure à 14 % en poids, une capacité d'adsorption de benzène déterminée à 30°C sous une pression partielle P/Ps = 0,25 supérieure à 11 % en poids, ladite zéolithe L possédant un réseau de pores secondaires (mésopores) dont les rayons sont compris entre 1,5 nm et 5 nm, le volume des pores secondaires représentant de 20 à 70 % du volume poreux total.

3. Zéolithe L selon l'une des revendications 1 et 2 dans laquelle le rapport molaire $SiO_2/Al_2O_3$ est supérieur à 100.

4. Zéolithe L selon l'une des revendications 1 et 2 dans laquelle le taux de cristallinité DX est supérieur à 60 %.

5. Zéolithe selon la revendication 4 dans laquelle ledit taux Dx est supérieur à 80 %.

6. Procédé de fabrication d'une zéolithe selon l'une des revendications 1 à 5 à partir d'une zéolithe L de rapport molaire $SiO_2/Al_2O_3$ compris entre 5 et 7, dont le rapport molaire $K^+/(K^+ + Na^+)$ est généralement compris entre 1 et 0,3 et dont les paramètres cristallins $\vec{a}$ et $\vec{c}$ sont respectivement égaux à 1,84 ± 0,004 et 0,752 ± 0,003 nm, le procédé étant caractérisé en ce que:

(a) On abaisse la teneur en potassium à une valeur inférieure à 6% en poids,

– soit par au moins un échange ionique, entre 0 et 150°C, dans une solution d'un sel d'ammonium ionisable de normalité située entre 0,1 N et la saturation,

– soit par au moins un traitement entre 0 et 150°C dans une solution d'un acide minéral ou organique de normalité inférieure à 1 N.
(b) On calcine sous air ou gaz inerte contenant moins de 1% de vapeur d'eau le produit obtenu à l'étape précédente pendant au moins 20 minutes à une température comprise entre 300 et 600°C, avec un débit total compris entre 0,5 et 100 $lh^{-1}g^{-1}$.
(c) On traite le produit obtenu à l'étape précédente entre 0 et 150°C:
– soit par une solution d'un sel d'ammonium ionisable de normalité comprise entre 0,1 N et la saturation,
– soit par une solution d'un acide minéral ou organique de normalité inférieure à 10 N de façon à abaisser la teneur en potassium à moins de 2,9% en poids.
(d) On soumet le produit obtenu à l'étape précédente:
– soit à une calcination dans un gaz (à base d'air ou inerte) renfermant en volume 5 à 100% de vapeur d'eau, entre 500 et 900°C, avec un débit total compris entre 0,10 et 100 $lh^{-1}g^{-1}$ pendant au moins 20 mn.
– soit à une calcination en atmosphère confinée (self steaming) entre 500 et 900°C pendant au moins 20 mn.
(e) On soumet le produit obtenu à l'étape précédente, pendant au moins 20 minutes, à au moins une attaque dans une solution d'un acide minéral ou organique entre 0 et 150°C, la solution acide ayant une normalité comprise entre 0,05 et 10 N.

7. Procédé de craquage catalytique d'une charge d'hydrocarbures en présence d'un catalyseur renfermant en poids:
(a) 30 à 95% d'au moins une matrice
(b) 5 à 70% d'une zéolithe L définie selon la revendication 1.

8. Procédé selon la revendication 7 dans lequel ladite zéolithe L est définie selon la revendication 2.

9. Procédé selon l'une des revendications 7 ou 8 dans lequel la charge est injectée dans une zone réactionnelle à une température comprise entre 80 et 400°C, sous une pression relative de 0,7 à 3,5 bars, et dans lequel on introduit dans cette zone réactionnelle du catalyseur régénéré à une température comprise entre 600 et 950°C.

10. Procédé d'isomérisation de paraffines en présence d'un catalyseur renfermant d'une part 0,1 à 5% en poids d'un métal noble de la famille du platine et d'autre part une zéolithe L définie selon la revendication 1.

11. Procédé selon la revendication 10 dans lequel la zéolithe L est définie selon la revendication 2.

12. Catalyseur renfermant en poids:
(a) environ 20 à 98% d'une matrice choisie dans le groupe constitué par au moins l'alumine, la silice, la silice-alumine, l'alumine-oxyde de bore, la magnésie, la silice-magnésie, la zircone, l'oxyde de titane, l'argile,
(b) environ 2 à 80% d'une zéolithe L définie selon la revendication 1,
(c) au moins un métal ou un composé de métal choisi dans le groupe constitué par les métaux nobles ou non nobles du groupe VIII de la classification périodique des éléments, la concentration en métal ou métaux nobles du groupe VIII, exprimée en poids de ce ou ces métaux, étant comprise entre 0,01 et 5%, la concentration en métal ou métaux non nobles du groupe VIII, exprimée en poids de ce ou ces métaux, étant comprise entre 0,01 et 15%.

13. Catalyseur selon la revendication 12 renfermant en poids:
(a) environ 50 à 95% d'une matrice choisie dans le groupe constitué par au moins l'alumine, la silice, la silice-alumine, l'alumine-oxyde de bore, la magnésie, la silice-magnésie, la zircone, l'oxyde de titane, l'argile,
(b) 3 à 50% environ d'une zéolithe L définie selon la revendication 2,
(c) au moins un métal ou un composé de métal choisi dans le groupe constitué par les métaux nobles ou non nobles du groupe VIII de la classification périodique des éléments, la concentration en métal ou métaux nobles du groupe VIII, exprimée en poids de ce ou ces métaux, étant comprise entre 0,03 et 3%, la concentration en métal ou métaux, non nobles du groupe VIII, exprimée en poids de ce ou ces métaux, étant comprise entre 0,05 et 10%.

14. Catalyseur selon l'une des revendications 12 et 13 dans lequel le rapport molaire $SiO_2/Al_2O_3$ de la zéolithe L est supérieur à 100.

15. Catalyseur selon l'une des revendications 12 à 14 dans lequel le taux de cristallinité DX de la zéolithe est supérieur à 60%.

16. Utilisation du catalyseur selon l'une des revendications 12 à 15, dans les procédés d'hydrocraquage d'hydrocarbures.

**Patentansprüche**

1. Zeolith L mit einem Gesamtmolverhältnis $SiO_2/Al_2O_3$ von wenigstens 8 mit einem Kaliumgehalt von weniger als 2,9 Gew.-%, einem Natriumgehalt von weniger als 0,5 Gew.-%, Kristallparametern $\vec{a}$ und $\vec{c}$ die jeweils kleiner als 1,836 nm und 0,754 nm sind, einem Stickstoffadsorptionsvermögen, gemessen bei 77 K unter einem Partialdruck P:Ps = 0,19 von mehr als 11 Gew.-%, einem Benzoladsorptionsvermögen, bestimmt bei 30°C unter einem Partialdruck P/Ps = 0,25, von mehr als 8,5 Gew.-%, wobei der Zeolith L ein Netz von Sekundärporen (Mesoporen) besitzt, deren Radien zwischen 0,8 nm und 20 nm liegen, wobei das Volumen der Sekundärporen 5 bis 70% des gesamten Porenvolumens darstellt.

2. Zeolith L nach Anspruch 1 mit einem Gesamtmolverhältnis $SiO_2/Al_2O_3$ von wenigstens 12, mit einem Kaliumgehalt von weniger als 0,7 Gew.-%, einem Natriumgehalt von weniger als 0,5 Gew.-%, Kristallparametern $\vec{a}$ und $\vec{c}$, die kleiner als 1,815 nm bzw. 0,752 nm sind, einem Stickstoffadsorptionsvermögen, gemessen bei 77 K unter einem Partialdruck P/PS = 0,19 von mehr als 14 Gew.-%, einem Benzoladsorptionsvermögen, bestimmt bei 30°C unter einem Partialdruck P/Ps = 0,25 von mehr als 11 Gew.-%, wobei der Zeolith L ein Netz von Sekundärporen (Mesoporen) besitzt, deren Radien zwischen 1,5 nm und 6 nm liegen, wobei das Volumen der Sekundärporen 20 bis 70% des Porengesamtvolumens darstellt.

3. Zeolith L nach einem der Ansprüche 1 und 2, bei dem das Molverhältnis $SiO_2/Al_2O_3$ über 100 beträgt.

4. Zeolith L nach einem der Ansprüche 1 bis 3, bei dem der Kristallinitätsgrad DX größer als 60% ist.

5. Zeolith nach Anspruch 4, bei dem der Grad DX größer als 80% ist.

6. Verfahren zur Herstellung eines Zeolithen nach einem der Ansprüche 1 bis 5 aus einem Zeolith L von einem Molverhältnis $SiO_2/Al_2O_3$ zwischen 5 und 7, dessen Molverhältnis $K^+/(K^+ + Na^+)$ im allgemeinen zwischen 1 und 0,3 liegt und dessen Kristallparameter $\vec{a}$ und $\vec{c}$, jeweils 1,84 ± 0,004 und 0,752 ± 0,003 nm sind. wobei das Verfahren sich dadurch auszeichnet, daß:

(a) man den Gehalt an Kalium auf einen Wert von weniger als 6 Gew.-% senkt.

– entweder durch wenigstens einen Ionenaustausch zwischen 0 und 150°C, in einer Lösung eines ionisierbaren Ammoniumsalzes von einer Normalität die zwischen 0,1 N und Sättigung liegt,

– oder durch wenigstens eine Behandlung zwischen 0 und 150°C in einer Lösung einer mineralischen oder organischen Säure einer Normalität von weniger als 1 N;

(b) man unter Luft oder Inertgas, das weniger als 1% Wasserdampf enthält, das in der vorhergehenden Stufe erhaltene Produkt während wenigstens 20 Minuten bei einer Temperatur zwischen 300 und 600°C bei einem Gesamtdurchsatz zwischen 0,5 und 100 $lh^{-1}g^{-1}$ kalziniert;

(c) man das in der vorhergehenden Stufe erhaltene Produkt zwischen 0 und 150°C behandelt:

– entweder durch eine Lösung eines ionisierbaren Ammoniumsalzes einer Normalität zwischen 0,1 N und Sättigung,

– oder durch eine Lösung einer mineralischen oder organischen Säure einer Normalität von weniger als 10 N, derart, daß der Gehalt an Kalium auf weniger als 2,9 Gew.-% gesenkt wird;

(d) man das in der vorhergehenden Stufe erhaltene Produkt aussetzt:

– entweder einer Kalzinierung in einem Gas (auf der Basis von Luft oder inertem Gas) das 5 bis 100% Wasserdampf enthält, zwischen 500 und 900°C bei einem Gesamtdurchsatz zwischen 0,10 und 100 $lh^{-1}g^{-1}$, und zwar wenigstens 20 Minuten lang;

– oder einer Kalzinierung in begrenzter Atmosphäre (self steaming) zwischen 500 und 900°C, und zwar wenigstens 20 Minuten lang;

(e) man das in der vorhergehenden Stufe erhaltene Produkt wenigstens 20 Minuten lang wenigstens einem Angriff in einer Lösung einer mineralischen oder organischen Säure zwischen 0 und 150°C aussetzt, wobei die saure Lösung eine Normalität zwischen 0,05 und 10 N hat.

7. Verfahren zum katalytischen Cracken einer Kohlenwasserstoffcharge in Anwesenheit eines Katalysators, der enthält:

(a) 30 bis 95 Gew.-% wenigstens einer Matrix, und

(b) 5 bis 70 Gew.-% eines Zeolithen L wie er in Anspruch 1 definiert wurde.

8. Verfahren nach Anspruch 7, bei dem dieser Zeolith L gemäß Anspruch 2 definiert ist.

9. Verfahren nach einem der Ansprüche 7 oder 8, bei dem die Charge in eine Reaktionszone bei einer Temperatur zwischen 80 und 400°C unter einem Relativdruck von 0,7 bis 3,5 Bar injiziert wird und bei dem man in diese Reaktionszone regenerierten Katalysator bei einer Temperatur zwischen 600 und 950°C einführt.

10. Verfahren zum Isomerieren von Paraffinen in Anwesenheit eines Katalysators, der einerseits 0,1 bis 5 Gew.-% eines Edelmetalls der Platinfamilie und andererseits einen Zeolithen L aufweist, wie er in Anspruch 1 definiert ist.

11. Verfahren nach Anspruch 10, bei dem der Zeolith L gemäß Anspruch 2 definiert ist.

12. Katalysator enthaltend (Gewicht):

(a) etwa 20 bis 98% einer Matrix, die gewählt ist aus der Gruppe, welche gebildet ist durch wenigstens Aluminiumoxid, Siliciumoxid, Siliciumoxid-Aluminiumoxid, Aluminiumoxid-Boroxid, Magnesiumoxid, Siliciumoxid-Magnesiumoxid, Zirkonoxid, Titanoxid und Ton.

(b) etwa 2 bis 80% eines Zeolithen L wie er in Anspruch 1 definiert wurde,

(c) wenigstens ein Metall oder eine Metallverbindung, die gewählt ist aus der Gruppe, die gebildet ist durch die Edelmetalle oder Nichtedelmetalle der Gruppe VIII des Periodensystems der Elemente, wobei die Konzentration an Edelmetall(en) der Gruppe VIII, ausgedrückt in Gewicht dieses Metalls oder dieser Metalle zwischen 0,01 und 5% beträgt, wobei die Konzentration an Nichtedelmetall(en) der Gruppe VIII, ausgedrückt in Gewicht dieses Metalls bzw. dieser Metalle zwischen 0,01 und 15% beträgt.

13. Katalysator nach Anspruch 12, enthaltend (Gewicht):
(a) etwa 50 bis 95% einer Matrix, gewählt aus der Gruppe, die gebildet wird durch wenigstens Aluminiumoxid, Siliciumoxid, Siliciumoxid-Aluminiumoxid, Aluminiumoxid-Boroxid, Magnesiumoxid, Siliciumoxid-Magnesiumoxid, Zirkonoxid, Titanoxid und Ton,
(b) etwa 3 bis 50% eines Zeolithen L, wie er gemäß Anspruch 2 definiert wurde, und
(c) wenigstens ein Metall oder eine Metallverbindung, die gewählt ist aus der Gruppe, bestehend aus den Edelmetallen oder Nichtedelmetallen der Gruppe VIII des Periodensystems der Elemente, wobei die Konzentration an Edelmetall(en) der Gruppe VIII, ausgedrückt in Gewicht des oder dieser Metalle zwischen 0,03 und 3% liegt, wobei die Konzentration an Nichtedelmetall(en) der Gruppe VIII, ausgedrückt in Gewicht dieses Metalls oder dieser Metalle zwischen 0,05 und 10% beträgt.
14. Katalysator nach einem der Ansprüche 12 und 13, bei dem das Molverhältnis $SiO_2/Al_2O_3$ des Zeolithen L größer als 100 ist.
15. Katalysator nach einem der Ansprüche 12 bis 14, bei dem der Kristallinitätsgrad DX des Zeolithen größer als 60% ist.
16. Verwendung des Katalysators nach einem der Ansprüche 12 bis 15 in den Verfahren des Hydrocrackens von Kohlenwasserstoffen.

## Claims

1. A L zeolite of total $SiO_2/Al_2O_3$ molar ratio at least equal to 8, having a potassium content lower than 2.9% by weight, a sodium content lower than 0.5% by weight, crystalline parameters $\vec{a}$ and $\vec{c}$ respectively lower than 1.836 nm and 0.754 nm, a nitrogen adsorption capacity, measured at 77 K, under a P/Ps partial pressure of 0.19, higher than 11% by weight, a benzene adsorption capacity at 30°C under a P/Ps partial pressure of 0.25, higher than 8.5% by weight, said L zeolite having a lattice of secondary pores (mesopores) whose radii range from 0.8 nm to 20 nm, the volume of the secondary pores amounting to 5–70% of the total pore volume.
2. A L zeolite according to claim 1, having a total $SiO_2/Al_2O_3$ molar ratio of at least 12, a potassium content lower than 0.7% by weight, a sodium content lower than 0.5% by weight, crystalline parameters $\vec{a}$ and $\vec{c}$ respectively lower than 1.815 nm and 0.752 nm, a nitrogen adsorption capacity, measured as 77 K under a P/Ps partial pressure of 0.19, higher than 14% by weight, a benzene adsorption capacity, determined at 30°C under a P/Ps partial pressure of 0.25, higher than 11% by weight, said L zeolite having a lattice of secondary pores (mesopores) whose radii range from 1,5 nm to 6 nm, the volume of the secondary pores amounting to 20–70% of the total pore volume.
3. A L zeolite according to one of claims 1 and 2, wherein the $SiO_2/Al_2O_3$ molar ratio is higher than 100.
4. A L zeolite according to one of claims 1 to 3, wherein the DX crystallinity rate is higher than 60%.
5. A zeolite according to claim 4, wherein said DX rate is higher than 80%.
6. A process for manufacturing a zeolite according to one of claims 1 to 5, from a L zeolite of $SiO_2/Al_2O_3$ molar ratio ranging from 5 to 7, whose $K^+/(K^+ + Na^+)$ molar ratio generally ranges from 1 to 0.3 and whose crystalline parameters $\vec{a}$ and $\vec{c}$ are respectively equal to 1.84 ± 0.004 and 0.752 ± 0.003 nm, said process being characterized by the steps of:
a) Reducing the potassium content to a value lower than 6% by weight,
– either by at least one ion exchange, between 0 and 150°C, in a solution of ionizable ammonium salt of normality in the range from 0.1 N to saturation,
– or by at least one treatment between 0 and 150°C in a solution of inorganic or organic acid of normality lower than 1 N.
b) Roasting, in air or inert gas containing less than 1% of steam, the product obtained in the preceding step, for at least 20 mn at a temperature ranging from 300 to 600°C, with total flow rate ranging from 0.5 to 100 $lh^{-1}g^{-1}$.
c) Treating the product obtained in the preceding step between 0 and 150°C:
– either with a solution of ionizable ammonium salt of normality ranging from 0.1 N to saturation,
– or with a solution of inorganic or organic acid of normality lower than 10 N, so as to decrease the potassium content to less than 2.9% by weight.
d) Subjecting the product obtained in the preceding step:
– either to roasting in a gas (essentially formed of air or inert gas) containing 5–100% by volume of steam,
– or to roasting in confined atmosphere (self-steaming).
e) Subjecting the product obtained in the preceding step, for at least 20 minutes, to at least one etching in a solution of inorganic or organic acid, between 0 and 150°C, the acid solution having a normality from 0.05 to 10 N.
7. A process for the catalytic cracking of a hydrocarbon charge in the presence of a catalyst containing by weight:
a) 30–95% of at least one matrix,

b) 5–70% of a L zeolite having a total $SiO_2/Al_2O_3$ molar ratio of at least 8, a potassium content lower than 2.9% by weight, a sodium content lower than 0.5% by weight, crystalline parameters $\vec{a}$ and $\vec{c}$ respectively lower than 1.836 nm and 0.754 nm, a nitrogen adsorption capacity, measured at 77 K under a P/Ps partial pressure of 0.19, higher than 11% by weight, a benzene adsorption capacity, determined at 30°C under a P/Ps partial pressure of 0.25, higher than 8.5% by weight, said L zeolite having a lattice of secondary pores (mesopores) of radii ranging from 0.8 nm to 20 nm, the volume of the secondary pores amounting to 5–70% of the total volume.

8. A process according to claim 7, wherein said L zeolite has a total $SiO_2/Al_2O_3$ molar ratio of at least 12, a potassium content lower than 0.7% by weight, a sodium content lower than 0.5% by weight, crystalline parameters $\vec{a}$ and $\vec{c}$ respectively lower than 1.815 nm and 0.752 nm, a nitrogen adsorption capacity, measured at 77 K under a P/Ps partial pressure of 0.19, higher than 14% by weight, a benzene adsorption capacity, determined at 30°C under a P/Ps partial pressure of 0.25, higher than 11% by weight, said L zeolite having a lattice of secondary pores (mesopores) of radii ranging from 1.5 nm to 6 nm, the volume of the secondary pores amounting to 20–70% of the total pore volume.

9. A process according to one of claims 7 and 8, wherein the charge is fed to a reaction zone at a temperature from 80 to 400°C, under a relative pressure of 0.7 to 3.5 bars, and wherein the regenerated catalyst is introduced in said reaction zone at a temperature from 600 to 950°C.

10. A process for isomerizing paraffins in the presence of a catalyst containing a L zeolite and 0.1–5% by weight of a noble metal of the platinum family, wherein said L zeolite has a total $SiO_2/Al_2O_3$ molar ratio of at least 8, a potassium content lower than 2.9% by weight, a sodium content lower than 0.5% by weight, crystalline parameters $\vec{a}$ and $\vec{c}$ respectively lower than 1.836 nm and 0.754 nm, a nitrogen adsorption capacity, measured at 77 K under a P/Ps partial pressure of 0.19, higher than 11% by weight, a benzene adsorption capacity, determined at 30°C under a P/Ps partial pressure of 0.25, higher than 8.5% by weight, said L zeolite having a lattice of secondary pores (mesopores) whose radii range from 0.8 nm to 20 nm, the volume of the secondary pores amounting to 5–70% of the total pore volume.

11. A process according to claim 10, wherein L zeolite has a total $SiO_2/Al_2O_3$ molar ratio of at least 12, a potassium content lower than 0.7% by weight, a sodium content lower than 0.5% by weight, crystalline parameters $\vec{a}$ and $\vec{c}$ respectively lower than 1.815 nm and 0.752 nm, a nitrogen adsorption capacity, measured at 77 K under a P/Ps partial pressure of 0.19, higher than 14% by weight, a benzene adsorption capacity, determined at 30°C under a P/Ps partial pressure of 0.25, higher than 11% by weight, said L zeolite having a lattice of secondary pores (mesopores) whose radii range from 1.5 nm to 6 nm, the volume of the secondary pores amounting to 20–70% of the total pore volume.

12. A catalyst containing by weight:

a) about 20–98% of a matrix selected from the group consisting of at least alumina, silica-alumina, alumina-boron oxide, magnesia, silica-magnesia, zirconia, titanium oxide, clay,

b) about 2–80% of a L zeolite having a total $SiO_2/Al_2O_3$ molar ratio at least equal to 8, a potassium content lower than 2.9% by weight, a sodium content lower than 0.5% by weight, crystalline parameters $\vec{a}$ and $\vec{c}$ respectively lower than 1.836 nm and 0.754 nm, a nitrogen adsorption capacity, measured at 77 K under a P/Ps partial pressure of 0.19, higher than 11% by weight, a benzene adsorption capacity, determined at 30°C under a P/Ps partial pressure of 0.25, higher than 8.5% by weight, said L zeolite having a lattice of secondary pores (mesopores) of radii ranging from 0.8 nm to 20 nm, the volume of the secondary pores amounting to 5–70% of the total pore volume.

c) at least one metal or compound of metal selected from the group consisting of the noble or non noble metals from group VIII of the periodic classification of the elements, the concentration of the one or more noble metals from group VIII, expressed as weight of said metal(s), ranging from 0.01 to 5%, the concentration of the one or more non noble metal(s) from group VIII, expressed as weight of said metal(s), ranging from 0.01 to 15%.

13. A catalyst according to claim 12, containing by weight:

a) about 50–95% of a matrix selected from the group consisting of at least alumina, silica, silica-alumina, alumina-boron oxide, magnesia, silica-magnesia, zirconia, titanium oxide, clay,

b) about 3–50% of a L zeolite having a total $SiO_2/Al_2O_3$ ratio of at least 12, a potassium content lower than 0.7% by weight, a sodium content lower than 0.5% by weight, crystalline parameters $\vec{a}$ and $\vec{c}$ respectively lower than 1.815 nm and 0.752 nm, a nitrogen adsorption capacity measured at 77 K under a P/Ps partial pressure of 0.19, higher than 14% by weight, a benzene adsorption capacity, determined at 30°C under a P/Ps partial pressure of 0.25, higher than 11% by weight, said L zeolite having a lattice of secondary pores (mesopores) of radii ranging from 1.5 nm to 20 nm, optionally from 2.5 nm to 6 nm, the volume of the secondary pores amounting to 20–70% of the total pore volume.

c) at least one metal or compound of metal selected from the group consisting of the noble or non noble metals from group VIII of the periodic classification of elements, the concentration of the one or more noble metal(s) from group VIII, expressed as the weight of said metal(s), ranging from 0.03 to 3%, the concentration of the one or more non noble metal(s) from group VIII, expressed as the weight of said metal(s), ranging from 0.05 to 10%.

14. A catalyst according to one of claims 12 and 13, wherein the $SiO_2/Al_2O_3$ molar ratio of L zeolite is higher than 100.

15. A catalyst according to one of claims 12 to 14, wherein the DX crystallinity rate of the zeolite is higher than 60%.

16. The use of the catalyst according to one of claims 12 to 15 in hydrocarbon hydrocracking processes.